# EUROPEAN PATENT APPLICATION

(11) **EP 3 875 556 A1**
(43) Date of publication of application: **08.09.2021**
(21) Application number: 20160704.1
(22) Date of filing: 03.03.2020
(51) Int. Cl.: C09D 163/00

(54) **COATING**

(71) Applicant: Jotun A/S, 3202 Sandefjord (NO)
(72) Inventor: The designation of the inventor has not yet been filed
(74) Representative: Gordon, Kirsteen Helen

(57) **Abstract**

The present invention relates to a coating composition, preferably a solvent-free composition, comprising:
(i) a binder;
(ii) optionally a curing agent;
(iii) hollow, inorganic, spherical, filler particles; and
(iv) hollow, organic, spherical, filler particles;
wherein the volume ratio of said inorganic, spherical filler particles to said organic, spherical filler particles is at least 1.1:1, preferably 1.1:1.0 to 10.0:1.0.

## Description

### INTRODUCTION

The present invention relates to a coating composition, which provides thermal insulation. The composition comprises a binder, optionally a curing agent, hollow, inorganic, spherical, filler particles, hollow, organic, spherical, filler particles and optionally a thickener. The invention also relates to a method of preparing the coating composition and to a container containing the composition. Additionally, the invention relates to a method of providing a coating, preferably an insulative coating, on a surface (e.g. a metal surface) and to a coating on a surface formed from the composition of the invention.

### BACKGROUND

Coatings that provide insulation are used in a wide range of applications. For instance, insulative coatings are used on metal pipes, tanks and fittings etc. in the oil and gas industry, where the equipment is often in contact with high temperature liquids and gases. The coating is required to have a low thermal conductivity so that sufficient insulation is provided. Typical coatings in use today are combinations of mineral wool, glass wool, and calcium silicate, which is usually covered with aluminium sheeting to protect it from water and humidity.

Generally, the higher the temperature of the metal surface on which the coating is applied, the thicker the insulative coating needs to be to achieve the necessary heat reduction across its thickness. However the greater the thickness of an insulative coating, the greater the tendency of the coating to crack, particularly when exposed to temperature changes (e.g. a sudden increase or decrease in temperature). The occurrence of cracking in a coating also tends to cause delamination or peeling (sometimes referred to as "flaking") of the coating from the metal surface. Moreover, as soon as cracking occurs, there is a risk of water and salt ingress underneath the coating, creating a hostile environment at the metal surface. This is a well-known problem in the oil and gas industry, often referred to as corrosion under insulation (CUI).

Relatively thick insulative coatings are also time consuming to apply, especially if the surface area to be coated is extensive (e.g. a length of pipe, or the entire surface of a tank). This is because it is usually necessary to apply a first layer of coating, and allowing it to dry and cure, before applying a second layer of coating, and so on. It is necessary to do this to avoid sagging of the coating, i.e. the coating running before it dries and cures. The thicker a layer of coating, the increased probability it will sag and the greater the extent of the sagging that occurs. Sagging is a particular problem when coating non-horizontal, e.g. vertical, surfaces and leads to unsightly, non-uniform coatings.

Insulative coatings are therefore required to be:
- Thermally insulative;
- Resistant to peeling at high temperatures;
- Resistant to cracking, even during temperature changes;
- Resistant to sag;
- Applicable to large surface areas, e.g. be sprayable;
- Resistant to water absorption which causes corrosion.

### SUMMARY OF INVENTION

Viewed from a first aspect the present invention provides a coating composition comprising:
(i) a binder;
(ii) optionally a curing agent;
(iii) hollow, inorganic, spherical, filler particles; and
(iv) hollow, organic, spherical, filler particles;
wherein the volume ratio of said inorganic, spherical filler particles to said organic, spherical filler particles is at least 1.1:1.

Viewed from a further aspect the present invention provides a method for preparing a composition as hereinbefore defined, comprising mixing:
(i) a binder;
(ii) optionally a curing agent;
(iii) hollow, inorganic, spherical, filler particles; and
(iv) hollow, organic, spherical, filler particles.

Viewed from a further aspect the present invention provides a kit for preparing a composition as hereinbefore defined, comprising:
(i) a first container containing binder, optionally hollow, inorganic, spherical, filler particles and optionally hollow, organic, spherical, filler particles;
(ii) a second container containing curing agent, optionally hollow, inorganic, spherical, filler particles and optionally hollow, organic, spherical, filler particles,
wherein each of said hollow, inorganic, spherical, filler particles and said hollow, organic, spherical, filler particles are present in at least one of said containers.

Viewed from a further aspect the present invention provides a coating composition comprising;
(i) a binder;
(ii) a curing agent;
(iii) hollow, inorganic, spherical, filler particles;
(iv) hollow, organic, spherical, filler particles; and
(v) a thickener.

Viewed from a further aspect the present invention provides a method for preparing a composition as hereinbefore defined, comprising mixing:
(i) a binder;
(ii) optionally a curing agent;
(iii) hollow, inorganic, spherical, filler particles;
(iv) hollow, organic, spherical, filler particles; and
(v) a thickener.

Viewed from a further aspect the present invention provides a kit for preparing a composition as hereinbefore defined, comprising:
(i) a first container containing binder, optionally hollow, inorganic, spherical, filler particles, optionally hollow, organic, spherical, filler particles and optionally thickener;
(ii) a second container containing curing agent, optionally hollow, inorganic, spherical, filler particles, optionally hollow, organic, spherical, filler particles and optionally thickener,
wherein each of said hollow, inorganic, spherical, filler particles, said hollow, organic, spherical, filler particles and said thickener are present in at least one of said containers.

Viewed from a further aspect the present invention provides a container containing a composition as hereinbefore described.

Viewed from a further aspect the present invention provides a method of providing a coating on a surface, wherein said method comprises:
(i) applying a composition as hereinbefore described; and
(ii) curing said composition to form a coating on the surface.

Viewed from a further aspect the present invention provides a coating on a surface, preferably a metal surface, wherein said coating is formed from a composition as hereinbefore described. Preferred coatings are insulating or insulative coatings.

Viewed from a further aspect the present invention provides the use of a composition as hereinbefore described to form a coating, preferably an insulating coating, on at least one surface of an article.

Viewed from a further aspect the present invention provides a use of a composition comprising:
(i) a binder;
(ii) a curing agent;
(iii) hollow, inorganic, spherical, filler particles; and
(iv) hollow, organic, spherical, filler particles,
to form an insulative coating on at least one surface, preferably a metal surface, of an article.

Viewed from a further aspect the present invention provides a coating on a surface, preferably a metal surface, wherein said coating is insulative, has a thickness of at least 2 mm, and said coating comprises:
(i) a binder;
(ii) a curing agent;
(iii) hollow, inorganic, spherical, filler particles; and
(iv) hollow, organic, spherical, filler particles.

### DEFINITIONS

As used herein the term "coating composition" refers to a composition that, when applied to a surface, forms a film or coating thereon.

As used herein the term "binder" refers to a polymer which forms a continuous film on a substrate surface when applied thereto. The other components of the composition are dispersed throughout the binder. The term "organic binder" refers to a binder that comprises carbon.

As used herein the term "hybrid binder" refers to a polymer formed of monomers from at least two binder classes, e.g. epoxy and acrylic.

As used herein the term "epoxy-based" refers to a polymer or oligomer comprising epoxy groups and/or modified epoxy groups. The term epoxy-based binder encompasses binders that have the traditional epoxy backbone but where epoxy end-groups are modified with, e.g. acrylic or methacrylic functional groups that can be cured with the same curing agents as the epoxy groups. Often the epoxy resin will comprise at least some epoxy groups. The term epoxy is used interchangeably with epoxide.

As used herein the term "solid epoxy resin" refers to a polymer that is solid at 25 °C and 1 atm.

As used herein the term "liquid epoxy resin" refers to a polymer that is liquid at 25 °C and 1 atm.

As used herein the term "epoxy" refers to a three-atom cyclic ether.

As used herein the term "epoxy binder system" refers to the combination of epoxy resin(s) and curing agent(s), and optionally reactive epoxy diluents, adhesion promotors and accelerators.

As used herein the phrase "equivalent epoxy weight" or "EEW" refers to the number of epoxide equivalents in 1 kg of resin. It is measured by ASTM D-1652.

As used herein the phrase "polysiloxane-based binder" refers to a binder comprising the -Si-O- repeat unit. The term polysiloxane-based encompasses binders that have the traditional -Si-O- backbone but where the terminal groups are modified. Polysiloxane binder may be organic or inorganic, but organic polysiloxane binder is preferred. In organic polysiloxane binders, the organic groups are present in side chains and/or in terminal groups.

As used herein the term "curable polysiloxane binder" refers to a polysiloxane-based binder comprises functional groups that enable a crosslinking reaction to take place either between polysiloxane-based binder molecules or via a crosslinking agent.

As used herein the term "polyurethane-based binder" refers to a binder having as the primary components one or more di- or poly-isocyanate components and a hydroxy functional component containing two or more hydroxyl groups (two component systems) or having as the primary components one or more isocyanate prepolymers (typically one component systems). Reaction (curing) of the isocyanate component(s) and the hydroxy functional component(s) results in the formation of a urethane-functionality.

As used herein the term "curing agent" refers to a compound which, when mixed with a binder, e.g. epoxy-based binder, produces a cured or hardened coating by generating cross-links within the polymer. Sometimes curing agents are referred to as hardeners.

As used herein the terms "curing accelerator" and "accelerator" are used synonymously and refer to compounds which increase the rate of the curing reaction to cure or harden the coating.

As used herein the term "filler" refers to a compound which increases the volume or bulk of a coating composition. They are substantially insoluble in the coating composition and are dispersed therein. When filler particle sizes are referred to herein, it is the particle size when they are added to the composition.

As used herein the term "hollow", when used in relation to either organic or inorganic, spherical, filler particles refers to particles having a void, cavity or empty space in the centre which is occupied by gas, typically air.

As used herein the term "spherical", when used in relation to either organic or inorganic, filler particles, encompasses substantially spherical and spherical particles. Substantially spherical particles are identical in size in each of the x, y and z dimensions, ± 1.2 µm, more preferably ± 0.6 µm.

As used herein the term "average diameter" refers to the Z-average diameter size as determined by ISO 22412:2017 using a Malvern Mastersizer 2000 if the particle size is above 5 µm.

As used herein the term "weight % (wt%)", when used in relation to individual constituents of the composition, e.g. thickener, reactive diluent, etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "Volatile Organic Compounds" refers to compounds having a boiling point ≤ 250°C at 101.3 kPa. This is the definition given in EU Directive 2004/42/CE.

As used herein the term "solvent-free" refers to a composition comprising less than 10 g/L VOCs.

As used herein the term "adhesion promoter" refers to a compound which improves the adhesion of a layer of coating to a target substrate (e.g. a metal substrate and/or to another layer of coating.

As used herein the term "organosilane" refers to a compound comprising at least one Si-C bond.

As used herein the term "anti-settling agent" refers to a compound which improves the uniformity of consistency during storage of a coating compositon. Generally anti-settling agents are thixotropic.

As used herein the term "thickener" refers to a compound which increases the viscosity of the coating composition. Sometimes thickeners are referred to as rheology modifiers.

As used herein the term "molecular weight" refers to weight average molecular weight (Mw), unless otherwise specified. It is determined by Gel Permeation Chromatography.

As used herein the term "density" when used in relation to hollow, spherical, filler particles, refers to density as determined by gas pycnometer.

### DETAILED DESCRIPTION OF THE INVENTION

The present invention relates to a coating composition comprising:
(i) a binder;
(ii) optionally a curing agent;
(iii) hollow, inorganic, spherical, filler particles; and
(iv) hollow, organic, spherical, filler particles;
wherein the volume ratio of said inorganic, spherical filler particles to said organic, spherical filler particles is at least 1.1:1.

Preferably the coating composition of the invention is solvent-free. Particularly preferably the composition comprises 0-10 g/L VOCs, more preferably 0-5 g/L VOCs and still more preferably 0-2.5 g/L VOCs.

Optionally the coating composition of the present invention further comprises: (v) a thickener; (vi) an adhesion promoter; (vii) a reactive diluent; and/or (viii) additives.

The coating composition of the invention provides coatings with a high level of thermal insulation, which means the thickness of the coating required to achieve sufficient insulation is minimised. Advantageously the coatings formed by the coating compositions of the present invention have both crack resistance, even during exposure to elevated temperatures (e.g. 150 °C) and thermal shock (e.g. directly from 150 to -20 °C) and temperature cycling (e.g. between -20 and 60 °C) as well as excellent adhesion to underlying surfaces, e.g. metal surfaces such as primed metal surfaces. Thus, the coatings formed by the coating compositions of the present invention have a lower tendency to peel, or flake, off from the underlying surface to which they are applied than conventional coatings. In combination, the improved crack resistance and improved adhesion of the coatings of the invention mean the coatings more effectively protect the underlying substrate (e.g. metal substrate) from corrosion.

Advantageously the coating compositions of the present invention also have a high level of sag resistance. This is highly beneficial as it means that thicker layers of coatings can be applied in a single step, meaning that relatively thick coatings can be prepared in a relatively small number of steps. This benefit is particularly useful when large, non-horizontal, surfaces are to be coated, e.g. the walls of tanks.

### Binder

The coating composition of the present invention comprises a binder. The type of binder present is primarily dependent on the environment in which the coating will ultimately be present, particularly the temperature of the environment and the corrosiveness of the environment. Preferably the binder is an organic binder.

Examples of suitable binder that may be present in the coating compositions of the invention include epoxy-based, preferably epoxy, acrylic-based, alkyd-based, phenolic-based, silicone, polysiloxane-based, polyurethane-based, polyurea-based, polyaspartic-based, and hybrids and mixtures thereof. Preferably the binder is selected from epoxy-based (e.g. epoxy), polysiloxane-based (e.g. polysiloxane), polyurethane-based (e.g. polyurethane), polyuria-based and hybrids and mixtures thereof.

Preferably the binder present in the coating composition is an organic binder or polysiloxane-based. More preferably the binder is an organic binder. Still more preferably the binder is an organic binder selected from epoxy-based, more preferably epoxy, polysiloxane-based, polyurethane and hybrids and mixtures thereof.

The total amount of binder present in the coating composition of the present invention is preferably 10-70 wt%, more preferably 15-60 wt%, still more preferably 15-50 wt% and yet more preferably 20-40 wt%, based on the total weight of the coating composition.

### Epoxy-based binder

In preferred coating compositions of the present invention, the organic binder is epoxy-based, and preferably epoxy. Optionally the epoxy-based binder is modified with fatty acids, polypropylene oxide and/or polyethylene oxide.

The epoxy-based binder, e.g. epoxy binder, may be a liquid epoxy-based binder or a solid epoxy-based binder, or a combination thereof. Preferably, however, the epoxy-based binder is a liquid epoxy-based binder. If the epoxy-based binder is a liquid, it preferably has a viscosity of 1000-20 000 mPa, more preferably 1500-15 000 mPas, still more preferably 1500-10 000 mPas and yet more preferably 2000-6500 mPas.

Preferred epoxy-based binders, e.g. epoxy binder, present in the coating compositions of the present invention have an equivalent epoxy weight (EEW) of 150-2000 g/eq, more preferably 155 to 1500 g/eq, still more preferably 160-1000 g/eq and yet more preferably 160-300 g/eq. The level of EEW is important to achieve an optimal mixing ratio between the epoxy-based binder and the curing agent (e.g. 1:1 to 4:1, such as 3:1 vol solids). It is well-known that low Mw (often correlated with low EEW) binders have lower viscosity and thus require less solvent for formulation. This is beneficial for achieving low VOC content or a solvent free composition.

Preferred epoxy-based liquid binder has an equivalent epoxy weight (EEW) of 156-1000. More preferred epoxy-based liquid binders have an EEW of less than 300, more preferably 156-300, and still more preferably 156-250. Preferred epoxy-based solid binder has an equivalent epoxy weight (EEW) of 300-1000, more preferably 350-750, still more preferably 400-700, and especially preferably 500-670.

Preferred epoxy-based binder comprises more than one epoxy group per molecule. Such epoxy-groups may be in an internal or terminal position on the epoxy-based binder or on a cyclic structure incorporated into the epoxy-based binder. Preferably the epoxy-based binder comprises at least two epoxy groups so that a cross-linked network can be formed.

Preferably the coating compositions of the present invention comprise one or more epoxy-based binders selected from aromatic epoxy-based binder, aliphatic epoxy-based binder and cycloaliphatic epoxy-based binder.

Representative examples of aliphatic and cycloaliphatic epoxy-based binders suitable for use in the compositions of the invention include hydrogenated bisphenol A, hydrogenated bisphenol A novolac and dicyclopentadiene-based binders, glycidyl ether (such as polyglycidyl ethers of polyhydric alcohols), epoxy functional acrylic resins and any hybrids or mixtures thereof. Modified, in particular acrylic or methacrylic modified, hydrogenated bisphenol A, hydrogenated bisphenol A novolac, dicyclopentadiene-based binder, glycidyl ether (e.g. polyglycidyl ethers of polyhydric alcohols) are also preferred.

Preferably the coating compositions of the present invention comprise an aromatic epoxy-based binder, e.g. an aromatic epoxy binder. Preferably the aromatic epoxy-based binder is derived from a combination of a compound comprising at least one epoxide functionality with an aromatic co-reactant comprising at least two hydroxyl groups.

Representative examples of aromatic epoxy-based binders suitable for use in the compositions of the invention include bisphenol type epoxy-based binders, such as bisphenol A, bisphenol F and bisphenol S, resorcinol diglycidyl ether (RDGE), novolac type epoxy-based binders, such as phenolic novolac type binders (bisphenol A novolac, bisphenol S novolac) and cresol novolac type binder and any hybrids or mixtures thereof. Modified, in particular acrylic or methacrylic modified, bisphenol A, bisphenol F and bisphenol S, resorcinol diglycidyl ether (RDGE), novolac type epoxy-based binders, such as phenolic novolac type binders (bisphenol A novolac, bisphenol S novolac) and cresol novolac type binder are also preferred.

Preferred examples of epoxy-based binders for use in the compositions of the invention are bisphenol A based binders, 4,4'- isopropylidenediphenol-epichlorohydrin binder, bisphenol F based binder, novolac based binder and hybrids and mixtures thereof. Particularly preferred epoxy-based binders are bisphenol A based binders, bisphenol F based binders and hybrids and mixtures thereof. In some compositions, the binder is preferably bisphenol A epoxy binder. In other compositions, the binder is preferably bisphenol F epoxy binder. In yet other compositions, the binder is preferably a mixture of bisphenol A and bisphenol F epoxy binders.

Bisphenol A epoxy-based binders will be known to those skilled the field and have the general structure below.

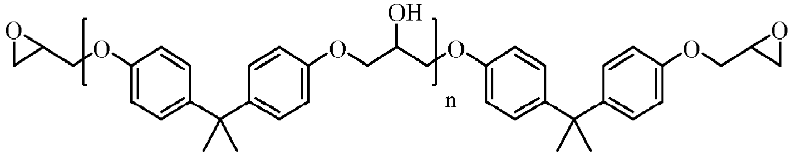

Particularly preferred coating compositions of the invention comprise one or more bisphenol F epoxy-based binders. A combination of two or more bisphenol F binders may optionally be used. It has been found that bisphenol F epoxy-based binders reduce the viscosity of the coating composition relative to coating compositions that comprise the more common bisphenol A epoxy-based binders. In turn this enables high solids, solvent free, coating compositions to be prepared, thereby reducing VOC.

Preferred bisphenol F epoxy-based binder has an EEW of 100-350. More preferably the EEW is 300 or less, e.g. 100-300, more preferably 150 to 250. Preferred bisphenol F epoxy-based binder is liquid. The viscosity of the bisphenol F epoxy-based binder is preferably 1000-10 000 mPas, and more preferably 2000-5000 mPas.

A preferred bisphenol F (4',4'-methylenebisphenol) epoxy-based binder derives from the combination of bisphenol F and epichlorohydrin. The use of a difunctional epoxy-based bisphenol F binder is especially preferred.

The solids content of the epoxy-based binder is preferably more than 70 wt%, preferably more than 80 wt%, preferably more than 90 wt%, most preferred more than 99 wt.%. Particularly preferably the epoxy-based binder is solvent free.

Suitable epoxy-based binder for use in the coating compositions of the invention are commercially available. Examples of commercially available epoxy-based binders suitable for the coating compositions include:
- Bisphenol A type epoxy-based binders: Epikote 828, Epikote 1004, Epikote 1001 X 75 and Epikote 1009 from Hexion. Araldite GY 250, Araldite GZ 7071X75BD and Araldite GZ 7071X75CH from Huntsman Advanced Materials. DER 664-20 and DER 684-EK40 from Dow Chemicals;
- Bisphenol F epoxy-based binders: Epikote 862 from Hexion, YDF- 170 from Kukdo, GY285 from Huntsman, DER 354 from Dow, BFE-170 from CCP, or KF8100 from Kolon; and
- Mixture of bisphenol A and bisphenol F: DER 352 and DEN 438-X 80 from Dow Chemicals, Epikote 235 from Hexion.

The coating compositions of the present invention may comprise one or more epoxy-based binders. If there are both liquid and solid epoxy-based binders present in the coating composition, it is preferred if the liquid epoxy-based binder is in excess relative to the solid epoxy-based binder.

The total amount of epoxy-based binder (i.e. liquid and solid) present in the coating composition of the present invention is preferably 10-60 wt%, more preferably 15-70 wt%, still more preferably 15-50 wt% and yet more preferably 20-40 wt%, based on the total weight of the coating composition.

### Polysiloxane-based binder

The polysiloxane-based binder present in the coating composition of the present invention may be any curable polysiloxane-based binder. Polysiloxane-based binder is particularly useful in coatings used to insulate articles, e.g. tanks or pipes, at very high temperatures, e.g. temperatures in excess of 100 °C.

The polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy, ketoxime, alcohol, amine, epoxy and/or isocyanate. A preferred polysiloxane-based binder contains curing-reactive functional groups selected from silanol, alkoxy or acetoxy groups. The curing reaction is typically a condensation cure reaction. The polysiloxane-based binder optionally comprises more than one type of curing-reactive group and may be cured, for example, via both condensation cure and amine/epoxy curing.

The polysiloxane-based binder present in the coating compositions of the present invention preferably comprises at least 30 wt% polysiloxane parts, preferably more than 50 wt% polysiloxane parts and still more preferably more than 70 wt% polysiloxane parts such as 99.99 wt% polysiloxane parts or more. Optionally the polysiloxane-based binder is pure polysiloxane.

The polysiloxane parts are defined as repeat units comprising the motif -Si-O-based on the total weight of the polysiloxane-based binder. The wt% of polysiloxane parts can be determined based on the stoichiometric wt ratio of starting materials in the polysiloxane synthesis. Alternatively, the polysiloxane content can be determined using analytical techniques such as IR or NMR. Information about the wt% polysiloxane parts in a commercially available polysiloxane-based binder is easily obtainable from the supplier.

It is to be understood that the polysiloxane-based binder can consist of a single repeating sequence of siloxane units or be interrupted by non-siloxane parts, e.g. organic parts. The organic parts may comprise, for example, alkylene, arylene, poly(alkylene oxide), amide, thioether or combinations thereof, preferably the organic parts may comprise, for example, alkylene, arylene, poly(alkylene oxide), amide, or combinations thereof.

In one preferred coating composition of the invention the polysiloxane-based binder comprises amine functional groups either in a terminal or pendant position.

The polysiloxane-based binder may consist of only one type of polysiloxane or be a mixture of different polysiloxanes.

In one preferred coating composition the polysiloxane-based binder is a branched polysiloxane-based binder.

A preferred polysiloxane-based binder present in the coating compositions of the present invention is represented by formula (D1) below: 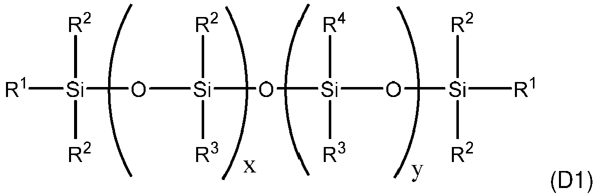 wherein
each R¹ is independently selected from a hydroxyl group, C₁₋₆-alkoxy group, C₁₋₆-hydroxyl group, C₁₋₆-epoxy containing group, C₁₋₆ amine group, C₁₋₁₀ alkyl, C₆₋₁₀ aryl, C₇₋₁₀ alkylary or O-Si(R⁵)_{3-z}(R⁶)_{z}
each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from an unsubstituted or substituted C₁₋₆ alkyl group;
z is 0 or an integer from 1-2;
x is an integer of at least 2;
y is 0 or an integer of at least 1.

Preferably R¹ is selected from a hydroxyl group and O-Si(R⁵)_{3-z}(R⁶)_{z}, wherein R⁵ is a C₁₋₆ alkoxy group, R⁶ is C₁₋₆ alkyl and z is 0 or an integer from 1-2. More preferably R¹ is selected from a hydroxyl group and O-Si(R⁵)_{3-z}(R⁶)_{z}, wherein R⁵ is a C₁₋₃ alkoxy group, R⁶ is C₁₋₃ alkyl and z is 0 or an integer from 1-2.

Preferably R² is a C₁₋₁₀ alkyl group, C₆₋₁₀ aryl, C₇₋₁₀ alkylaryl or O-Si(R⁵)_{3-z}(R⁶)_{z}

Preferably R³ is a C₁₋₁₀ alkyl group or C₆₋₁₀ aryl. More preferably R³ is a C₁₋₄ alkyl group or a C₆ aryl group, still more preferably a C₁₋₂ alkyl group or a C₆ aryl group, and yet more preferably a methyl group or a phenyl group.

Preferably R⁴ is a C₁₋₁₀ alkyl group or C₆₋₁₀ aryl. More preferably R³ is a C₁₋₄ alkyl group or a C₆ aryl group, still more preferably a C₁₋₂ alkyl group or a C₆ aryl group, and yet more preferably a methyl group or a phenyl group.

In one preferred coating composition the polysiloxane-based binder of the present invention is a branched polysiloxane comprising methyl, phenyl and methoxy groups.

The weight average molecular weight of the polysiloxane-based binder present in the coating compositions of the present invention is preferably 400-150,000 g/mol, more preferably 1000-120,000 g/mol, and still more preferably 5000-110,000 g/mol.

Suitable polysiloxane-based binders for use in the coating composition of the present invention are commercially available. Representative commercially available polysiloxane-based binders include REN 50 and REN 80 from Wacker, Silikophen P50X and Silikophen P80X from Evonik.

Preferred coating compositions of the present invention comprise 10-60 wt% polysiloxane-based binder, more preferably 15-70 wt% polysiloxane-based binder and still more preferably 15-50 wt% polysiloxane-based binder, based on the total dry weight of the composition.

### Polyurethane-based binder

In preferred coating compositions of the present invention, the organic binder is polyurethane-based, and preferably polyurethane.

One preferred polyurethane-based binder for use in the coating compositions of the present invention comprises: a) a poly-isocyanate component and b) a hydroxy functional component, comprising at least two hydroxyl groups. The cross-linking is from the reaction between the poly-isocyanate component a) and hydroxyl functional component b).

Suitable poly-isocyanates for use as poly-isocyanate component a) in the coating composition are well known in the art. Examples of suitable low molecular weight poly-isocyanates, having a molecular weight of 168 to 300 g/mol, include: hexamethylene diisocyanate (HDI), 2,2,4- and/or 2,4,4-trimethyl-1,6-hexamethylene diisocyanate, dodecamethylene diisocyanate, 2,4-diisocyanato-1-methyl-benzene (toluene diisocyanate, TDI), 2,4-diisocyanato-1-methylbenzene, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues which are obtained in a known manner by the phosgenation of aniline/formaldehyde condensates, 2,4-and/or 2,6-diisocyanatotoluene, and any mixture of these compounds.

In some preferred coating compositions of the present invention the polyisocyanate component a) is selected from aliphatic polyisocyanates, e.g. hexamethylene diisocyanate (HDI), 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, and 2,4-and/or 4,4'-diisocyanato-diphenyl methane.

In other preferred coating compositions of the present invention the polyisocyanate component a) is selected from aromatic polyisocyanates, e.g. 2,4-diisocyanato-1-methyl-benzene (toluene diisocyanate, TDI), 2,4-diisocyanato-1-methylbenzene and mixtures of these isomers with their higher homologues which are obtained in known manner by the phosgenation of aniline/formaldehyde condensates, 2,4-and/or 2,6-diisocyanatotoluene and any mixtures of these compounds.

In preferred coating compositions of the present invention the polyisocyanate component a) is a derivative of the above-mentioned monomeric poly-isocyanates, as is conventional in the art. These derivatives include polyisocyanates containing biuret groups. Examples of particularly preferred derivatives include N,N',N"-tris-(6-isocyanatohexyl)-biuret and mixtures thereof with its higher homologues and N,N',N"-tris-(6-isocyanatohexyl)-isocyanurate and mixtures thereof with its higher homologues containing more than one isocyanurate ring.

Examples of suitable commercially available poly-isocyanates are:
Desmodur N3900 (formerly VP2410), ex. Bayer (Germany), aliphatic polyisocyanate
Desmodur N3600, ex. Bayer (Germany), aliphatic polyisocyanate
Desmodur N3800, ex. Bayer (Germany), aliphatic polyisocyanate
Tolonate HDT-LV2, ex. Rhodia (France), aliphatic polyisocyanate
Desmodur N3390, ex. Bayer (Germany), aliphatic polyisocyanate
Tolonate HDT90, ex. Rhodia (France), aliphatic polyisocyanate
Basonat HI 190 B/S, ex. BASF (Germany), aliphatic polyisocyanate
Desmodur N75, ex. Bayer (Germany), aliphatic polyisocyanate
Bayhydur VP LS 2319, ex. Bayer (Germany), aliphatic polyisocyanate
Tolonate IDT 70B, ex. Rhodia (Frane), aliphatic polyisocyanate
Desmodur H, ex Bayer (Germany).
Basonat HB 175 MP/X BASF - Germany aliphatic polyisocyanate

Examples of suitable commercially available aromatic polyisocyanate resins are:
Desmodur L67 BA (Bayer Material Science)
Desmodur E21 (Bayer Material Science)
Desmodur VL (Bayer Material Science)
Voratron EC 112 (Dow Chemicals)
Desmodur E23 (Bayer Material Science)
Desmodur E 1660 (Bayer Material Science)
Suprasec 2495 (Huntsman Advanced Materials).

Isocyanate group-containing prepolymers and semi-prepolymers based on the monomeric poly-isocyanates mentioned above, and organic polyhydroxyl compounds, are also preferred for use as poly-isocyanate component a). These pre-polymers and semi pre-polymers generally have an isocyanate content of 0.5-30 % by weight, preferably 1-20 % by weight, and are prepared in a known manner by the reaction of the above mentioned starting materials at an NCO/OH equivalent ratio of 1.05:1 to 10:1 preferably 1.1:1 to 3:1, this reaction being optionally followed by distillative removal of any un-reacted volatile starting poly-isocyanates still present.

The pre-polymers and semi pre-polymers may be prepared from polyhydroxyl compounds having a molecular weight of 62 to 299 g/mol. Examples include ethylene glycol, propylene glycol, trimethylol propane, 1,6-dihydroxy hexane; low molecular weight, hydroxyl-containing esters of these polyols with dicarboxylic acids of the type exemplified hereinafter; low molecular weight ethoxylation and/or propoxylation products of these polyols; and mixtures of the afore-mentioned polyvalent modified or unmodified alcohols.

Preferably the pre-polymers and semi pre-polymers are prepared from relatively high molecular weight polyhydroxyl compounds. These polyhydroxyl compounds have at least two hydroxyl groups per molecule and more preferably have a hydroxyl group content of 0.5-17 % by weight, preferably 1-5 % by weight.

Examples of commercially available polyester polyols include:
Desmophen 651 MPA, ex. Bayer (Germany)
Desmophen VP LS 2089, ex. Bayer Material Science (Germany)

Polyether polyols, which are obtained in a known manner by alkoxylation of suitable starting molecules, are also suitable for the preparation of the isocyanate group-containing pre-polymers and semi pre-polymers. Examples of suitable starting molecules for the polyether polyols include the previously described monomeric polyols, water, and any mixture thereof. Ethylene oxide and/or polylene oxide are particularly suitable alkylene oxides for the alkoxylation reaction. These alkylene oxides may be introduced into the alkoxylation reaction in any sequence or as a mixture.

Examples of commercial available polyether polyols include:
Desmophen 1380 BT 03/2008 (previously Desmophen 550 U), ex. Bayer Material Science (Germany)
Voranol CP 450 Polyol, ex. Dow Chemicals (Germany)

Hydroxyl group-containing polycarbonates, which may be prepared by the reaction of the previously described monomeric diols with phosgene and diaryl carbonates such as diphenyl carbonate, are also suitable for the preparation of the pre-polymers and semi pre-polymers.

Preferably component b) is based in whole or in part on organic polyhydroxyl compounds and include both low molecular weight polyhydroxyl compounds and relatively high molecular weight polyhydroxyl compounds as hereinbefore described for the preparation of the pre-polymers and semi pre-polymers suitable for use as poly-isocyanate component a).

Particularly preferred hydroxyl functional, isocyanate-reactive, compounds that may be used as component b) are the hydroxy functional poly acrylates known for use in polyurethane coatings. These compounds are hydroxyl-containing copolymers of olefinically unsaturated compounds having a number average molecular weight (Mn) determined by vapour pressure or membrane osmometry of 800-50,000, preferably 1000-20,000 and more preferably 5000-10,000, and having a hydroxyl group content of 0.1-12 % by weight, preferably 1-10 % by weight and most preferably 2-6 % by weight. The copolymers are based on olefinic monomers containing hydroxyl groups and olefinic monomers that are free from hydroxyl groups. Examples of suitable monomers include vinyl and vinylidene monomers such as styrene, α-methyl styrene, *o*- and *p-*chloro styrene, o-, m- and p-methyl styrene, p-tert-butyl styrene; acrylic acid; (methy)acrylonitrile; acrylic and methacrylic acid esters of alcohols containing 1 to 8 carbon atoms such as ethyl acrylate, methyl acrylate, n- and isopropyl acrylate, n-butyl acrylate, 2-ethylhexyl acrylate, 2-ethylhexyl methacrylate, iso-octyl acrylate, methyl methacrylate, ethyl methacrylate, butyl methacrylate and iso- octyl methacrylate; diesters of fumaric acid, itaconic acid or maleic acid having 4 to 8 carbon atoms in the alcohol component; (methy)acrylic acid amide; vinyl esters of alkane monocarboxylic acids having 2 to 5 carbon atoms such as vinyl acetate or vinyl propionate; and hydroxyalkyl esters of acrylic acid or methacrylic acid having 2 to 4 carbon atoms in the hydroxyalkyl group such as 2- hydroxyethyl-, 2, hydroxypropyl-, 4-hydroxybutyl-acrylate and methacrylate and trimethylol propane-mono- or pentaerythritomono-acrylate or methyacrylate. Mixtures of the afore-mentioned monomers may also be used for the preparation of the hydroxy functional poly acrylates. Mixtures of the polyhydroxyl compounds hereinbefore described may also be used as component b).

In preferred polyurethane based binders, components a) and b) are used in amounts sufficient to provide an equivalent ratio of isocyanate groups to isocyanate-reactive (hydroxyl) groups of 0.8:1 to 20:1, preferably 0.8:1 to 2:1, more preferably 0.8: 1 to 1.5:1, even more preferably 0.8:1 to 1.2:1 and most preferably about 1:1. The hydroxyl functional compound b) is preferably present in an amount such that up to 20 hydroxyl groups are present. Preferably the equivalent ratio of hydroxyl groups to secondary amino groups is 10:1 to 1:10.

Examples of suitable commercially available hydroxyl functional (isocyanate-reactive) resins include:
Synocure 878 N 60, ex. Arkem (Spain), hydroxyl functional acrylic resin in aromatic hydrocarbon.
Synthalat A 0 77, ex. Synthopol Chemie (Germany)
Synthalat A 045, ex. Synthopol Chemie (Germany)
Synthalat A 088 MS, ex. Synthopol Chemie (Germany)
Synthalat A 141 HS 05, ex. Synthopol Chemie (Germany)
Synthalat A 060, ex. Synthopol Chemie (Germany)
Desmophen A XP 2412, ex. Bayer Material Science (Germany)
Synthalat A-TS 1603, ex. Synthopol Chemie (Germany)
Acrylamac 332-2629, ex. Momentive (Germany)

### Polyurea-based binder

In some preferred coating compositions of the present invention the organic binder is a polyurea-based binder and preferably polyurea. The polyurea-based binder comprises a di or poly-isocyanate component and an amine functional component comprising at least two amine groups.

Suitable poly-isocyanates for use in the coating composition are well known in the art. Examples of suitable poly-isocyanates are as described for the polyurethane-based binder above.

The amine groups in the amine functional component are preferably primary or secondary amine groups. More preferably the amine groups are secondary amine groups.

Particularly preferably the amine groups have been pre-reacted with esters of for example maleic acid and fumaric acid to create polyaspartic acid ester derivatives. Preferred polyaspartic acid ester derivatives are represented by the formula below: 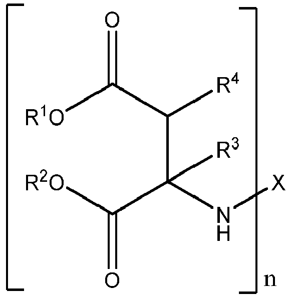 wherein
X represents an organic group that is inert towards isocyanate groups at temperatures of up to 100 °C;
each R¹ and R² are independently selected from organic groups that are inert towards isocyanate groups at temperatures of up to 100 °C;
each R³ and R⁴ are independently selected from hydrogen and organic groups that are inert towards isocyanate groups at temperatures of up to 100 °C;
n is an integer of at least 2.

Examples of suitable amine functional components include ethylene diamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminoundecane, 1-amino-3,3,5-trimethyl-5-aminomethyl-cyclohexane, 2,4 and/or 2,6-hexahydrotoluylene diamine, 2, 4'-and/or 4, 4'-diamino-dicyclohexyl methane and 3, 3'-dimethyl-4,4'-diamino-dicyclohexyl methane. Aromatic polyamines such as 2,4-and/or 2,6-diaminotoluene and 2,4'-and/or 4,4'-diaminophenyl methane are also suitable. Polyether polyamines may also be used.

### Curing Agent

The coating composition of the invention optionally comprises a curing agent. The coating composition preferably comprising a curing agent when the binder is selected from epoxy-based, preferably epoxy, phenolic-based, silicone, polysiloxane-based, polyurethane-based, polyurea-based, polyaspartic-based, and hybrids and mixtures thereof. When the binder is acrylic or alkyd, a curing agent is optionally present.

When present the curing agent reacts with the binder, e.g. epoxy-based binder during curing to form a coating, e.g. a film coating. The curing agent therefore facilitates the provision of a coating composition with an acceptable cure time. In preferred coating compositions of the invention, the curing agent cures the binder at temperatures in the range -5-50 °C, more preferably 0-40 °C. Preferably the curing agent cures at ambient temperature. The ambient temperature of an environment is variable, depending on, e.g. geographical location, and might be -5-50 °C. An advantage of the coating composition of the invention is that it is curable in this range, i.e. -5-50 °C. Unlike many known coating compositions, it does not need to be cured in an oven.

Conventional curing agents may be used in the coating composition of the present invention.

The total amount of binder and curing agent(s) in the coating composition of the invention is preferably 20 to 80 wt%, more preferably 30 to 70 wt% and still more preferably 40 to 60 wt%, based on the total weight of the coating composition. The total amount of curing agent(s) in the coating composition of the invention is preferably 10 to 40 wt% and still more preferably 15 to 30 wt%, based on the total weight of the coating composition.

### Curing Agents for Epoxy-based binders

To obtain a cross-linked network with an epoxy-based binder the curing agent must contain at least two "reactive" hydrogen atoms. The term "reactive" refers to hydrogen atoms that may be transferred from the nucleophile to the oxygen atom of the epoxide during the ring opening reaction. The curing agent typically contains at least two curing reactive functional groups.

Representative examples of classes of suitable curing agents that may be used with epoxy-based binders include thiol curing agents, polythiol curing agents, amine curing agents, polyamine curing agents and/or amino functional polymer curing agents. The curing agent may also alternatively comprise at least one amino functional polysiloxane. The coating compositions of the present invention may comprise a mixture of curing agents.

Examples of suitable polythiol curing agents include pentaerythriol tetramercapto propionate. An example of a suitable commercially available polythiol curing agent is GABEPRO® GPM800 from Gabriel performance materials.

Preferred coating compositions of the present invention comprise an amine curing agent, a polyamine curing agent, or an amino functional polymer curing agent or a mixture thereof. More preferably the coating composition comprises at least one amine functional curing agent.

Preferably the curing agent contains at least two amine groups. The amine groups may be primary or secondary.

Suitable amine, polyamine, and amino functional polymer curing agents are selected from aliphatic amines and polyamines (e.g. cycloaliphatic amines and polyamines), polyamido amines, polyoxy alkylene amines (e.g. polyoxy alkylene diamines), alkylene amines (e.g. alkylene diamines), aralkyl amines, aromatic amines, Mannich bases (e.g. those sold commercially as "phenalkamines"), amino functional silicones or silanes, and epoxy adducts and derivatives thereof. Adducts may be prepared by reaction of the amine with suitably reactive compounds such as epoxy-binders, epoxy-functional reactive diluent, acrylates, maleates, fumarates, methacrylates or electrophilic vinyl compounds such as acrylonitrile.

Examples of suitable commercially available amine functional curing agents include:
Sunmide CX-105X, Ancamine 2609, Ancamine 2695, Ancamine 2712M, Ancamine 2738, Ancamide 260A, Ancamide 500, Ancamide 506, Ancamide 2386, Ancamine 2759, Ancamine 2760, Ancamine 1618, Ancamine 2165, Ancamine 2280, Ancamine 2432, Ancamine 2519, Ancamine 2802, Ancamine 2609w, Ancamine 2806 from Evonik;
Epikure 3090, Epikure 3140 and Epikure 3115-X-70 from Hexion;
Mannich base AP1077 from Admark Polycoats;
MXDA and Gaskamine 240 from Mitsubishi Gas Chemical Company Inc; and
Aradur 42 BD and Aradur 943 CH from Huntsman Advanced Materials.

In one preferred coating composition of the invention comprising epoxy-based binder the curing agent is a Mannich base (phenalkamine) curing agent. Phenalkamines are obtained from cardanol, a major component of cashew nutshell liquid. Phenalkamines contain aliphatic or cycloaliphatic polyamine substituents attached to an aromatic ring. Suitable commercially available Mannich base (phenalkamine) curing agents are available from Cardolite. Examples include Cardolite NC 541, Cardolite Lite 2001 and Cardolite Lite 2002.

In other preferred coating composition of the invention comprising epoxy-based binder the curing agent is an aliphatic and/or cycloaliphatic polyamine, such as an Ancamine curing agent from Evonik.

The curing agent may be be supplied neat or in a solvent. Preferably, however, the curing agent is solvent free. A key parameter of the curing agent is its viscosity. Preferably the curing agent has a viscosity below 1000 mPas, more preferably below 700 mPas. Such viscosities facilitate the incorporation of higher amounts of hollow, spherical, fillers thereby improving thermal insulation.

It is common in this field to quote the equivalent weight of the curing agent in terms of the "active hydrogen equivalent weight". The number of "active hydrogen equivalents" in relation to the one or more curing agents is the sum of the contribution from each of the one or more curing agents. The contribution from each of the one or more curing agents to the active hydrogen equivalents is defined as grams of the curing agent divided by the active hydrogen equivalent weight of the curing agent, where the active hydrogen equivalent weight of the curing agent is determined as: grams of the curing agent equivalent to 1 mol of active hydrogen. For adducts with epoxy-based binder, the contribution of the reactants before adduction is used for the determination of the number of "active hydrogen equivalents" in the complete epoxy-based binder system.

It is also common to quote the number of "epoxy equivalents" in the epoxy-based binders. The "epoxy equivalents" is the sum of the contribution from each of the one or more epoxy-based binders and any other component that contains an epoxy such as a silane or a reactive diluent. The contribution from each of the one or more epoxy-based binders to the epoxy equivalents is defined as grams of the epoxy-based binder divided by the epoxy equivalent weight of the epoxy-based binder, where the epoxy equivalent weight of the epoxy-based binder is determined as: grams of the epoxy resin equivalent to 1 mol of epoxy groups. For adducts with epoxy-based binder the contribution of the reactants before adduction is used for the determination of the number of "epoxy equivalents" in the epoxy-based binder system.

In preferred coating compositions of the invention the ratio between the hydrogen equivalents of the totality of the curing agents and the totality of epoxy equivalents in the epoxy-based binder system of the present invention is in the range of 50: 100 to 120: 100. Further preferred epoxy-based binder systems have a ratio between the hydrogen equivalents of the curing agent and the epoxy equivalents of the epoxy resin in the range of 60: 100 to 130: 100 such as 80: 100 to 120: 100, e.g. 90: 100 to 110: 100.

It will be appreciated that the curing agent is kept separate to the binder, e.g. epoxy-based binder, and is only mixed therewith shortly before application to the surface. The mixing ratio of the binder, e.g. epoxy-based binder and the curing agent, is governed by the relative amounts of epoxy and active hydrogens present. Preferably, the mixing ratio of binder to curing agent in solids volume is 1:1 to 10:1, more preferably 5:1 to 2:1.

The total amount of binder, e.g. epoxy-based binder, and curing agent(s) is preferably 20 to 80 wt%, more preferably 30 to 70 wt% and still more preferably 40 to 60 wt%, based on the total weight of the coating composition. The total amount of curing agent(s) in the coating composition of the invention is preferably 10 to 40 wt% and still more preferably 15 to 30 wt%, based on the total weight of the coating composition.

### Curing agents for Polysiloxane-based Binders

As described above, the polysiloxane-based binder that may be present in the coating compositions of the present invention is curable and contains curing-reactive functional groups, such as silanol, carbinol, carboxyl, ester, hydride, alkenyl, vinyl ether, allyl ether, alkoxysilane, ketoxime, amine, epoxy, isocyanate and/or alkoxy groups. Preferably the polysiloxane-based binder contains at least two curing-reactive functional groups. Optionally the polysiloxane-based binder comprises more than one type of curing-reactive functional group. Preferably the polysiloxane-based binder comprises a single type of curing-reactive functional group. The appropriate crosslinking and/or curing agents are chosen depending on the curing-reactive functional groups present in the polysiloxane-based binder.

In preferred polysiloxane-based binders the curing-reactive functional groups are silanol, carbinol, alkoxysilane, isocyanate, amine and/or epoxy. In still further preferred polysiloxane-based binders the curing-reactive functional groups are silanol, amine and/or alkoxysilane.

It may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from an unsubstituted or substituted monovalent hydrocarbon group of 1 to 6 carbon atoms or a C₁₋₆ alkyl substituted by poly(alkylene oxide);
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane, as well as hydrolysis-condensation products thereof.

If the curing-reactive functional groups are di or tri-alkoxy, a separate crosslinking agent is generally not required.

The crosslinking agent is preferably present in amount of 0-10 wt% of the total dry weight of the coating composition. Suitable crosslinking agents are commercially available, such as Silcate TES-40 WN from Wacker and Dynasylan A from Evonik.

If the curing-reactive functional groups are amine, epoxy or isocyanate, the curing agents are preferably amine, sulfur or epoxy functional.

The curing agents can also be dual curing agents containing, for example, both amine/sulphur/epoxy/isocyanate and an alkoxysilane. Preferred dual curing agents are represented by the general formula below: 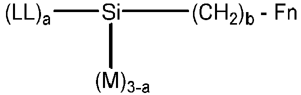 wherein
LL is independently selected from an unsubstituted or substituted monovalent hydrocarbon group of 1 to 6 carbon atoms;
each M is independently selected from a hydrolysable group such as an alkoxy group; a is 0, 1 or 2, preferably 0 or 1;
b an integer from 1 to 6; and
Fn is an amine, epoxy, glycidyl ether, isocyanate or sulphur group.

Preferred examples of such dual curing agents include 3-isocyanatopropyltrimethoxysilane, 3- isocyanatopropyltriethoxysilane, 3-aminopropyltrimethoxysilane, 3-aminopropyltriethoxysilane, (3-glycidoxypropyl)trimethoxysilane, 3-mercaptopropyltrimethoxysilane. One particularly preferred curing agent is 3-aminopropyltriethyoxysilane such as Dynasylan AMEO from Evonik.

This type of dual-curing agents can be used as a separate curing agent or be used to end-cap the polysiloxane-based binder so that the end-groups of the polysiloxane-based binder are modified prior to the curing reaction. For example, the mixing of the polysiloxane-based binder and the curing agent can be carried out shortly before application of the coating to an article, e.g. an hour or less before coating or the polysiloxane-based binder can be supplied in curable form but kept dry in order to prevent premature curing. In some compositions the curing agent/end capping agent is preferably supplied separately to the rest of the coating composition to prevent curing before the coating has been applied to the object.

### Curing agents for Polyurethane-based and Polyurea-based Binders

Catalysts are optionally used with polyurethane and polyurea binder to speed up the curing reaction. Examples of suitable catalysts include tetramethylbutanediamine (TMBDA), N-alkyl morpholines, triethylamine (TEA), 1,8-diazabicyclo[5.4.0]undecene-7 (DBU), pentamethyldiethylene-triamine (PMDETA), zinc octoate, dioctyltin dilaurate dibutyltin dilaurate, and dibutyltin oxide, in particular from dioctyltin dilaurate dibutyltin dilaurate, and dibutyltin oxide.

### Accelerator

The coating composition of the present invention optionally further comprises a curing accelerator. In some preferred coating compositions, a curing accelerator is not present. In such compositions, the curing agent is employed without the use of a separate catalyst to accelerate the crosslinking process. In other preferred coating compositions a curing accelerator is employed to speed up the rate of the curing reaction to form a coating, e.g. a film coating.

Any conventional curing accelerator may be present in the coating compositions of the present invention. For example, the curing accelerator may be selected from imidazoles, anhydrides, polyamides, aliphatic amines, epoxy resin-amine adducts, phenols and tertiary amines. Imidazoles, e.g. 2-methylimidazole, are preferred curing accelerators.

The total amount of curing accelerator present in the coating composition of the present invention is preferably 0-5 wt%, more preferably 0.1-2 wt% and still more preferably 0.1-1 wt%, based on the total weight of the coating composition.

### Accelerator for Epoxy-based binder

When the binder is epoxy-based (e.g. epoxy binder) the curing accelerator may be any known curing accelerator for epoxy-based coating systems. Examples include tertiary amines, (meth)acrylic esters, imidazoles, organic acids, phenols and organic phosphines.

Examples of suitable tertiary amines are triethanol amine, dialkylamino ethanol, triethylene diamine, 1,4-diazabicyclo[2.2.2]octane, 1,8-diaza-bicyclo[5.4.0]undec-7-ene and 2,4,6-tris(dimethylaminomethyl)phenol. One particularly preferred accelerator is 2,4,6-tris(dimethylaminomethyl)phenol such as Ancamine K54 from Evonik.

Examples of suitable imidazoles are 2-methylimidazole, 2-phenylimidazole, 2-phenyl-4-methyl imidazole and 2-heptadecylimidazole.

Examples of suitable organic acids are benzoic acid derivatives such as salicylic acid.

Examples of suitable organic phosphines are tributyl phosphine, methyldiphenyl phosphine, triphenyl phosphine, diphenyl phosphine and phenyl phospine.

Examples of suitable phenols are alkyl phenols such as nonylphenol and Novares LS500.

A particularly preferred curing accelerator, particularly for use with epoxy-based binder, is a (meth)acrylic ester. The (meth)acrylic ester accelerator is preferably an aliphatic (meth)acrylate comprising at least two (meth)acrylate functional groups linked by an organic linker. Such a multiester may be a diester, a triester or a tetraester.

The molecular weight of the (meth)acrylic ester is preferably less than 1000.

Preferably the (meth)acrylic ester is a (meth)acrylate ester of a polyol such as a diol, or triol or a sugar based polyol such as a sugar alcohol. It is not essential for all OH groups within a polyol to carry the (meth)acrylate ester group, however there should preferably be at least two ester functionalities in the (meth)acrylic ester. Suitable polyols for functionalization include alkylene diols (e.g. hexanediol, pentanediol), saccharides (e.g. mono or disaccharides) or polyols (especially sugar alcohols) such as erythritol, sorbitol, maltitol and mannitol.

Particularly preferred (meth)acrylic esters for use as curing accelerators are of formula (I) 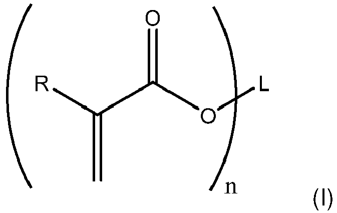 wherein
each R is H or Me;
each n is 2-5;
and L represents the residue of a polyol, a saccharide or sugar alcohol, wherein at least two OH groups in the polyol carry are derivatised as shown in formula (I).

Preferably L consists only of C, H and O atoms. Preferably the molecular weight of L is less than 1000 g/mol.

Examples of commercially available (meth)acrylic esters include M-Cure 400 from Sartomer.

### Accelerator for Polysiloxane-based binder

When the binder is polysiloxane-based, the curing accelerator preferably comprises a catalyst. Representative examples of catalysts that can be used include transition metal compounds, metal salts and organometallic complexes of various metals, such as, tin, iron, lead, barium, cobalt, zinc, antimony, cadmium, manganese, chromium, nickel, aluminium, gallium, germanium, titanium, boron, lithium, potassium, bismuth and zirconium. The salts preferably are salts of long-chain carboxylic acids and/or chelates or organometal salts.

Examples of suitable tin-based catalysts include for example dibutyltin dilaurate, dibutyltin dioctoate, dibutyltin diacetate or dioctyltin dilaurate. Examples of commercially available tin catalysts include BNT-CAT 400 and BNT-CAT 500 from BNT Chemicals, FASCAT 4202 from PMC Organometallix and Metatin Katalysator 702 from DOW.

Examples of suitable zinc catalysts are zinc 2-ethylhexanoate, zinc naphthenate and zinc stearate. Examples of commercially available zinc catalysts include K-KAT XK-672 and K-KAT670 from King Industries and Borchi Kat 22 from Borchers.

Examples of suitable bismuth catalysts are organobismuth compounds such as bismuth 2-ethylhexanoate, bismuth octanoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT716 from TIB Chemicals.

Examples of suitable titanium catalysts are organotitanium catalysts such titanium naphthenate, tetrabutyl titanate, tetrakis(2- ethylhexyl)titanate, triethanolamine titanate, tetra(isopropenyloxy)-titanate, titanium tetrabutanolate, titanium tetrapropanolate, titanium tetraisopropanolate and chelated titanates such as diisopropyl bis(acetylacetonyl)titanate, diisopropyl bis(ethylacetoacetonyl)titanate and diisopropoxytitanium bis(ethylacetoacetate). Examples of suitable commercially available titanium catalysts are Tyzor IBAY from Dorf Ketal and TIB KAT 517 from TIB Chemicals

Other suitable catalysts are iron catalysts such as iron stearate and iron 2-ethylhexanoate, lead catalysts such as lead octoate and lead 2-ethyloctoate cobalt catalysts such as cobalt-2-ethylhexanoate and cobalt naphthenate, manganese catalysts such as manganese 2-ethylhexanoate and zirconium catalysts such as zirconium naphthenate, tetrabutyl zirconate, tetrakis(2- ethylhexyl) zirconate, triethanolamine zirconate, tetra(isopropenyloxy)-zirconate, zirconium tetrabutanolate, zirconium tetrapropanolate and zirconium tetraisopropanolate.

Further suitable catalysts are zirconate esters.

The catalyst may also be an organic compound, such as triethylamine, guanidine, amidine, cyclic amines, tetramethylethylenediamine, 1,4-ethylenepiperazine and pentamethyldiethylenetriamine. Further examples include aminosilanes, such as 3-aminopropyltriethoxysilane and N,N-dibutylaminomethyl-triethoxysilane.

In one preferred embodiment the catalyst is a tin, titanium, bismuth, guanidine and/or amidine catalyst, more preferably a titanium, guanidine and/or amidine catalyst.

Preferably the catalyst is present in the coating composition of the invention in an amount of 0.01 to 5 wt% based on the total dry weight of the coating composition, more preferably 0.05 to 4 wt%.

### Reactive diluent

The coating compositions of the invention preferably further comprise a reactive diluent. Reactive diluents may be used singly or in combination, e.g. in a mixture of two or more reactive diluents.

Preferably the viscosity of the reactive diluent is <100 cp, preferably <50 cP, more preferably <30 cP, and still more preferably <20 cP.

Preferably the epoxy equivalent weight (EEW) of the reactive diluent is 50-500, more preferably 100-400, and still more preferably 100-300.

Preferred reactive diluents for use in the coating compositions of the invention are formed from a modified epoxy compound. Examples of suitable reactive diluents include: phenyl glycidyl ether, C₁₋₁₆ alkyl glycidyl ether, C₈₋₁₀ alkyl glycidyl ester of neodecanoic acid (i.e. R¹R²R³C-COO-Gly, where R¹, R², and R³ are C₈₋₁₀ alkyl groups and Gly is a glycidyl group), olefin epoxide, CH₃-(CH₂)ₙ-Gly, wherein n is 11 to 13 and Gly is a glycidyl group, 1,4-butanediol diglycidyl ether (i.e. Gly-O-(CH₂)₄-O-Gly), 1,6-hexanediol diglycidyl ether (i.e. Gly-O-(CH₂)₆-O-Gly), neopentyl glycol diglycidyl ether (i.e. Gly-O-CH₂-C(CH₃)₂-CH₂-O-Gly), trimethylolpropane triglycidyl ether (i.e. CH₃-CH₂-C(CH₂-O-Gly)₃), C₁₋₂₀-alkylphenyl glycidyl ether (preferably C₁₋₅ alkylphenylglycidyl ether, e.g. methylphenyl glycidyl ether, ethylphenyl glycidyl ether, propylphenyl glycidyl ether and para tertiary butyl phenyl glycidyl ether (p-TBPGE)), and reaction products of epichlorohydrin and an oil obtained from the shells of cashew nuts.

Particularly preferred reactive diluents are C₁₋₁₆ alkyl glycidyl ethers, and more preferably C₁₀₋₁₄ alkyl glycidyl ether.

Another preferred reactive diluent is the reaction product of epichlorohydrin and an oil obtained from the shells of cashew nuts. An example of a commericially available reactive diluent of this type is Cardolite NC-513 from Cardolite.

Another preferred class of reactive diluents are aliphatic reactive diluents. The aliphatic reactive diluents are preferably formed from the reaction of a compound comprising at least one aliphatic epoxide functionality with an aliphatic alcohol or polyol, such as 1,6-hexanediol diglycidyl ether or 1,4-butanediol diglycidyl ether. Aliphatic glycidyl ethers of chain length 8 to 14 are also preferred. Aliphatic reactive diluents may contribute to the flexibility of the coating film.

The coating compositions of the present invention preferably comprise 0-30 wt%, more preferably 10-25 wt% and still more preferably 10-20 wt% reactive diluent, based on the total weight of the coating composition. The presence of reactive diluent in the coating compositions of the present invention reduces the viscosity of the coating composition and facilitates preparation of a high solids, solvent free, coating composition.

The total amount of binder, e.g. epoxy-based binder, curing agent(s), accelerator and reactive diluent is preferably 20 to 80 wt%, more preferably 30 to 70 wt% and still more preferably 40 to 60 wt%, based on the total weight of the coating composition.

### Hollow, inorganic, spherical filler particles

The coating composition of the present invention comprises hollow, inorganic, spherical, filler particles. Suitable hollow, inorganic, spherical, filler particles are commercially available. Examples of commercially available hollow, inorganic, spherical filler particles include FilliteCenosphere, Poraver (expanded glass), Thermospheres, Omega shperes (availale from e.g. 3M, Trelleborg, Potters, SMC minerals) and Hollolite.

The hollow, inorganic, spherical particles are a critical component of the coating composition. These particles contribute to the thermal insulation provided by the coatings prepared with the coating composition as well as to the coating crack resistance, even during exposure to elevated temperatures (e.g. 150 °C), thermal shock (e.g. directly from 150 to -20 °C) and temperature cycling between -20 and 60 °C).

The inorganic, spherical, filler particles are hollow. This means the particles have a void or cavity in their centres. This void or empty space is filled with gas, preferably air. This provides the insulative property of the coating. Preferred inorganic, spherical, filler particles for use in the present invention are substantially hollow. Thus preferably the volume of the void or cavity is at least 70 %vol and more preferably at least 80 %vol of the total volume of the particles. Preferably the hollow, inorganic, spherical, filler particles have as low a density as practicable, e.g. the density of the hollow, inorganic, spherical, filler particles might be 0.1-1 gcm⁻³, more preferably 0.2-0.8 gcm⁻³, and still more preferably 0.25-0.5 gcm⁻³, e.g. as specified on the technical specification provided by suppliers. This reflects the fact that the particles are hollow rather than solid. Lower density particles are advantageous because they have thinner walls which, in turn, improves thermal insulation.

Preferably the hollow, inorganic, spherical, filler particles present in the coating compositions of the present invention have a crush strength of at least 3000 psi, e.g. as determined by the Nitrogen Isostatic Crush Strength test. This is beneficial as it means that the filler particles are not crushed during processing and thus maintain their ability to provide insulation in the final coatings. It is also advantageous that the filler particles do not change shape and/or size during processing, so they can pack tightly and achieve a high build in the final coatings formed.

The hollow, inorganic, spherical, filler particles present in the coating compositions of the present invention comprise and more preferably consist of glass, ceramic or metal oxide. More preferably the hollow, inorganic, spherical, filler particles present in the coating compositions of the present invention comprise and still more preferably consist of glass. This is because glass particles provide a good balance of crush strength, hardness and conductivity. Optionally the hollow, inorganic, spherical, filler particles present in the coating compositions of the present invention may be surface treated. Some examples of surface treatment include treatment to alter the hydrophobicity of the surface, to improve compatibility with the binder and/or to facilitate chemical incorporation into the binder.

The hollow, inorganic, filler particles present in the coating compositions of the invention are substantially spherical and more preferably spherical. This is advantageous as it allows the filler particles to pack more closely together in the coating compositions of the invention. Preferably the hollow, inorganic, filler particles have a Z-average diameter of 1 to 100 µm, more preferably 1 to 80 µm and still more preferably 10-50 µm, as determined by ISO 22412:2017 using a Malvern Mastersizer 2000. These particle sizes are preferred to ensure that the coating has adequate insulative properties and achieve a high packing efficiency in the coating.

Preferred coating compositions of the present invention comprise 30-60 vol%, more preferably 30-55 vol% and still more preferably 40-55 vol% hollow, inorganic, spherical, filler particles, based on the total volume of the composition.

Preferred coating compositions of the present invention comprise 10-40 wt%, more preferably 15-35 wt% and still more preferably 20-30 wt% hollow, inorganic, spherical, filler particles, based on the total weight of the composition.

### Hollow, organic, spherical, filler particles

The coating composition of the present invention comprises hollow, organic, spherical, filler particles. The hollow, organic, spherical, filler particles present in the coating compositions of the present invention may be prepared by conventional polymerisation processes, such as emulsion polymerisation, seeded growth polymerisation and suspension polymerisation. The polymerisation may be a single stage process or a multi-step process. Alternatively, suitable hollow, organic, spherical, filler particles are commercially available. Examples of commercially available hollow, organic, spherical filler particles include Dualite (from Chase), Sunsheres (from Dow) and Expancel (from Nouryon).

The hollow, organic, spherical particles are a critical component of the coating composition. These particles contribute to the thermal insulation provided by the coatings prepared with the coating composition as well as to the coating crack resistance and adhesiveness, i.e. resistance to peeling.

The organic, spherical, filler particles are hollow. This means the particles have a void or cavity in their centres. This void or empty space is filled with gas, preferably air, C₁₋₈ alkanes, or a mixture thereof. This provides the insulative property of the coating. Preferred organic, spherical, filler particles for use in the present invention are substantially hollow. Thus preferably the volume of the void or cavity is at least 70 %vol and more preferably at least 80 %vol of the total volume of the particles. Preferably the hollow, organic, spherical, filler particles have a density as low as practicable, e.g. the hollow, organic, spherical, filler particles have a density of 0.005-0.9 gcm⁻³, more preferably 0.01-0.5 gcm⁻³, still more preferably 0.015-0.2 gcm⁻³, e.g. as specified on the technical specification provided by suppliers. This reflects the fact that the particles are hollow rather than solid.

The hollow, organic, spherical, filler particles present in the coating compositions of the present invention comprise, and more preferably consist of, poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), vinylidene, polyacetate, poly(ester), or copolymers thereof. Hollow, organic, spherical, filler particles comprising these polymers have been found to yield coatings with high thermal insulation and good crack resistance, even at elevated temperatures.

The hollow, organic, filler particles present in the coating compositions of the invention are substantially spherical and more preferably spherical. This is advantageous as it allows the filler particles to pack more closely together in the coating compositions of the invention. Preferably the hollow, organic, filler particles have a Z-average diameter of 10 to 150 µm, more preferably 10 to 120 µm and still more preferably 15-120 µm, as determined by ISO 22412:2017 using a Malvern Mastersizer 2000. These particle sizes are preferred to ensure that the coating has adequate insulative properties and achieve a high packing efficiency in the coating.

Preferred coating compositions of the present invention comprise 5-20 vol%, more preferably 10-20 vol% and still more preferably 10-15 vol% hollow, organic, spherical, filler particles, based on the total volume of the composition.

Preferred coating compositions of the present invention comprise 0.25-1.75 wt%, more preferably 0.25-1 wt% and still more preferably 0.3-0.7 wt% hollow, organic, spherical, filler particles, based on the total weight of the composition.

In preferred coating compositions of the present invention, the average diameter of the hollow, organic, spherical filler particles is greater than the average diameter of the hollow, inorganic, spherical filler particles. Preferably the average diameter of the hollow, organic, spherical, filler particles is 1-5 times greater, and more preferably 2-4 times greater than the average diameter of the hollow, inorganic, spherical filler particles. With this combination of hollow, filler particles it has been found that coatings with a high level of thermal insulation, as well as peel and crack resistance can be provided.

In preferred coating compositions of the present invention, the volume ratio of hollow, inorganic, spherical filler particles to hollow, organic, spherical particles is 1.1:1.0 to 10.0:1.0, preferably 5:1:1.0 to 1.2:1.0, more preferably 4:1:1.0 to 1.2:1.0 and still more preferably 3.8:1:1.0 to 1.3:1.0. It has been found that with this ratio, wherein the amount by volume of hollow, inorganic, spherical filler particles is greater than the amount by volume of hollow, organic, spherical filler particles, provides the most desirable balance of cracking and peeling resistance, whilst maintaining adequate thermal insulation and hardness.

In further preferred coating compositions of the present invention, the weight ratio of hollow, inorganic, spherical filler particles to hollow, organic, spherical particles is at least 50:2.5, preferably 50:2.5 to 50:0.25.

Preferred coating compositions of the present invention comprise a total amount of 50-80 vol%, more preferably 60-70 vol% of hollow, inorganic, spherical filler particles and hollow, organic, spherical filler particles, based on the total volume of the composition. The hollow, spherical, filler particles therefore comprise a significant total volume amount of the composition and provide its key thermal insulation property.

Further preferred coating compositions of the present invention comprise a total amount of 10-40 wt%, more preferably 15-30 wt% of hollow, inorganic, spherical filler particles and hollow, organic, spherical filler particles, based on the total weight of the composition.

### Thickener

The coating compositions of the present invention further comprise a thickener. Optionally a mixture of at least 2 or 3 thickeners may be present. The presence of the thickener in the coating compositions of the present invention advantageously improves the storage stability, the application properties of the compositions and the sagging resistance of the compositions.

Another coating composition of the present invention therefore comprises:
(i) a binder;
(ii) a curing agent;
(iii) hollow, inorganic, spherical, filler particles;
(iv) hollow, organic, spherical, filler particles; and
(v) a thickener.

Preferred coating compositions of the invention comprise a thickener which is solvent-free. This is beneficial to reduce the VOC content of the compositions and to increase its solids content.

A wide range of conventional thickeners may be used in the coating compositions of the present invention. However, preferred coating compositions of the present invention comprise an oligomeric thickener. Without wishing to be bound by theory, it is believed that these thickeners build viscosity at low shear rates through building an interacting network of crystalline fibres, and thereby improve the sagging resistance of the compositions. This is particularly beneficial when the coating compositions of the invention are applied to non-horizontal, e.g. vertical, surfaces.

Examples of suitable oligomeric thickeners include polyhydroxycarboxylic acid amides, polyhydroxycarboxylic acid esters, modified ureas, metal sulfonates, acrylated oligoamines, polyacrylic acids, modified urethanes, micronized amide waxes, micronized amide modified castor oil waxes, micronized castor oil derived waxes, pre-activated amide wax dispersed in (meth)acrylate monomers or polyamides. Preferred coating compositions of the invention comprise an oligomeric thickener selected from micronized amide waxes, micronized amide modified castor oil waxes, micronized castor oil derived waxes, pre-activated amide wax dispersed in (meth)acrylate monomers. A particularly preferred thickener is an amide wax.

Oligomeric thickeners for use in the coating compositions of the present invention are commercially available. For instance, micronized amide waxes are available under the tradename, Crayvallac from Arkema.

The amount of thickener, preferably oligomeric thickener, present in the coating composition of the present invention is preferably 0 to 5 wt%, more preferably 0.25-3.0 wt% and still more preferably 0.5-3.0 wt% and still more preferably 0.5 to 2.0 wt%, based on the total weight of the coating composition.

### Adhesion promoter

The coating composition of the present invention preferably further comprises an adhesion promoter, more preferably an organosilane adhesion promoter. Such adhesion promoters are well known in the art.

Silanes, especially organosilanes, are believed to improve the drying properties of the coating composition, particularly at low temperatures. They also are thought to improve flexibility, adhesion to substrates and anti-corrosive performance.

Preferably, the silane comprises an epoxy group. Preferably the silane has a Mw of less than 400 g/mol.

Preferred silanes for use in the coating composition of the present invention are of general formula (II) or (III):

(II) Y-R(_{4-z})SiX_{z}

(III) Y-R_{(3-y)}R¹SiX_{y}

wherein
z is an integer from 1 to 3;
y is an integer from 1 to 2;
R is a hydrocarbyl group having 1 to 12 C atoms, optionally containing an ether or amino linker;
R¹ is a hydrocarbyl group having 1 to 12 C atoms; Y is a functional group bound to R that can react with the binder, e.g. epoxy-based binder, and/or the curing agent; and
each X independently represents a halogen group or an alkoxy group.

In preferred compounds of formula (II) and (III) Y is an isocyanate, epoxy, amino, hydroxy, carboxy, acrylate, or methacrylate group. The Y group may bind to any part of the chain R. It will be appreciated that where Y represents an epoxy group then R will possess at least two carbon atoms to allow formation of the epoxide ring system.

In further preferred compounds of formula (II) and (III), Y is an amino group or epoxy group. The amino groups are preferably NH₂. Preferably Y is an epoxy group. If the Y group is an amino group that can react with the epoxy-based binder, it is preferred if the silane is provided separately from the epoxy-based binder together with the curing agent. In general, in the kit of the invention, the silane should not react with any ingredient of the component of the kit in which the silane is present.

In preferred compounds of formula (II) or (III), R is preferably a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH-group in the chain, e.g. to form a silane such as [3-(2,3-Epoxypropoxy)propyl]trimethoxysilane: H₂COCHCH₂OCH₂CH₂CH₂Si(OCH₃)₃.

It is preferred if the group Y does not bind to a carbon atom which is bound to such a linker -O- or -NH-.

R is preferably an unsubstituted (other than Y obviously), unbranched alkyl chain having 2 to 8 C atoms.

In preferred compounds of formula (II) and (III), X is an alkoxy group, such as a C₁₋₆ alkoxy group, especially preferably a methoxy or ethoxy group. It is also especially preferred if there are two or three alkoxy groups present. Thus in compounds in formula (II) z is preferably 2 or 3, especially 3. In compounds of formula (III), y is preferably 2.

In preferred compounds of formula (III), R¹ is preferably C₁₋₄ alkyl such as methyl.

A particularly preferred silane present in the coating compositions of the present invention is of formula (IV):

(IV) Y'-R'(_{4-z'})SiX'_{z'}

wherein
z' is an integer from 2 to 3;
R' is a unsubstituted, unbranched alkyl chain having 2 to 8 C atoms, optionally containing an ether or amino linker;
Y' is an amino or epoxy functional group bound to the R' group; and
X' represents an alkoxy group.

Examples of suitable silanes for use in the coating compositions of the present invention include: products manufactured by Degussa in Rheinfelden and marketed under the brand name of Dynasylan®D, the Silquest® silanes manufactured by OSi Specialties, and the GENOSIL® silanes manufactured by Wacker.

Specific examples include methacryloxypropyltrimethoxysilane (Dynasylan MEMO, Silquest A-174NT), 3-mercaptopropyltri(m)ethoxysilane (Dynasylan MTMO or 3201; Silquest A-189), 3-glycidoxypropyltrimethoxysilane (Dynasylan GLYMO, Silquest A-187), tris(3-trimethoxysilylpropyl) isocyanurate (Silquest Y-11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-I 120) or N-(2-aminoethyl)-3-aminopropyltriethoxysilane, triamino- functional trimethoxysilane (Silquest A- 1130), bis(gamma- trimethoxysilylpropyl)amine (Silquest A-I 170), N-ethyl-gamma- aminoisobytyltrimethoxy silane (Silquest A-Link 15), N-phenyl-gamma- aminopropyltrimethoxysilane (Silquest Y-9669), 4-amino-3,3-dimethylbutyltrimethoxysilane (Silquest Y-I 1637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other preferred silanes include 3-Aminopropyltriethoxysilane, 3-aminopropyltrimethoxysilane, N-(Aminoethyl)-aminopropyltrimethoxysilane (H₂NCH₂CH₂NHCH₂CH₂CH₂Si(OCH₃)₃), 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂ CH₂CH₂Si(OCH₂CH₃)₃, [3-(2,3-Epoxypropoxy)propyl]trimethoxysilane (H₂COCHCH₂OCH₂CH₂CH₂ Si(OCH₃)₃).

3-glycidoxypropyltrimethoxysilane is especially preferred. A mixture of silanes might also be used.

The amount of adhesion promoter, preferably organosilane adhesion promoter, present in the coating composition of the present invention is preferably 0 to 15 wt%, more preferably 0.1-10 wt% and still more preferably 0.5-5 wt% and still more preferably 0.5 to 3 wt%, based on the total weight of the coating composition. In preferred compositions of the invention the total amount of organosilanes present therein is preferably 0 to 15 wt%, more preferably 0.1-10 wt% and still more preferably 0.5-5 wt% and still more preferably 0.5 to 3 wt%, based on the total weight of the coating composition.

### Additives

The coating composition of the invention optionally comprises a wide variety of additives. Examples of additives that are optionally present in the composition of the invention include co-binder, hydrocarbon resin, anti-settling agent, fillers, amino alcohols, colour pigment, drying agents, dispersing agents, and surface modifying agents.

Additional additives are preferably present in an amount of 0 to 20 wt%, more preferably 0.1-10 wt%, still more preferably 0.1 to 5 wt% and particularly preferably 0.5 to 5 wt%, based on the total weight of the coating composition.

The coating composition of the present invention optionally comprises a co-binder. Examples of suitable co-binders include saturated polyester resins, polyvinylacetate, polyvinylbutyrate, copolymers of vinyl acetate, vinyl isobutyl ether, copolymers of vinyl chloride and vinyl isobutyl ether, styrene co-polymers such as styrene/butadiene co-polymers, acrylic resins, hydroxy-acrylate copolymers, fatty acids and cyclized rubbers.

The coating composition of the present invention preferably comprises 0-10 wt% co-binder, based on the total weight of the composition.

The coating composition of the invention optionally comprises a hydrocarbon resin. A wide range of hydrocarbon resins are suitable for including in the coating composition. Preferably the hydrocarbon resin is a petroleum resin.

Examples of petroleum resins suitable in the present invention include an aromatic petroleum resin obtained by polymerizing a C₉ fraction (e.g. styrene derivatives such as alpha methylstyrene, *o*, *m*, *p*-cresol, indene, methyl indene, cumene, napthalene or vinyltoluene) obtained from a heavy oil that is produced as a by-product by naphtha cracking, an aliphatic petroleum resin obtained by polymerizing a C₅ fraction such as 1,3-pentadiene or isoprene, 2-methyl-2-butene, cyclopentadiene, dicyclopentadiene or cyclopentene. Also employable in the invention are a copolymer-based petroleum resin obtained by copolymerizing the C₉ fraction and the C₅ fraction, an aliphatic petroleum resin wherein a part of a conjugated diene of the C₅ fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene. Mixtures of diaryl and triaryl compounds obtained from reaction of C₉ blends under catalytic conditions are also possible to utilize.

The coating composition of the present invention preferably comprises 0-10 wt%, hydrocarbon resin, based on the total weight of the composition.

### Compositions

Preferred coating compositions of the present invention comprise:
(i) binder, preferably epoxy-based binder;
(ii) a curing agent;
(iii) hollow, inorganic (e.g. glass), spherical, filler particles; and
(iv) hollow, organic, spherical, filler particles;
wherein the volume ratio of said inorganic, spherical filler particles to said organic, spherical filler particles is at least 1.1:1.

Further preferred coating compositions of the present invention comprise:
(i) epoxy-based binder;
(ii) a curing agent;
(iii) accelerator;
(iv) reactive diluent;
(v) hollow, inorganic, spherical, filler particles, preferably hollow, glass, spherical, filler particles;
(vi) hollow, organic, spherical, filler particles;
(vii) optionally an adhesion promoter; and
(viii) optionally a thickener
wherein the volume ratio of said inorganic, spherical filler particles to said organic, spherical filler particles is at least 1.1:1.

Further preferred coating compositions of the present invention comprise:
(i) 15-50 wt%, preferably 20-40 wt% epoxy-based binder;
(ii) 10-40 wt%, preferably 15-30 wt%, curing agent;
(iii) 15-35 wt%, preferably 20-30 wt%, hollow, inorganic (e.g. glass), spherical, filler particles; and
(iv) 0.25-1.0 wt%, preferably 0.3-0.7 wt%, hollow, organic, spherical, filler particles;
wherein the volume ratio of said inorganic, spherical filler particles to said organic, spherical filler particles is at least 1.1:1.

Particularly preferred coating compositions of the present invention comprise:
(i) 15-50 wt%, preferably 20-40 wt% epoxy-based binder;
(ii) 10-40 wt%, preferably 15-30 wt%, curing agent;
(iii) 15-35 wt%, preferably 20-30 wt%, hollow, inorganic (e.g. glass), spherical, filler particles;
(iv) 0.25-1.0 wt%, preferably 0.3-0.7 wt%, hollow, organic, spherical, filler particles;
(v) 0.1-10 wt%, preferably 0.5-5 wt%, adhesion promoter; and
(vi) 0.25-3 wt%, preferably 0.5-2 wt%, thickener.

In such compositions the volume ratio of said inorganic, spherical filler particles to said organic, spherical filler particles is preferably at least 1.1:1.

Preferred coating compositions of the invention have a solids content of least 98 wt%, more preferably at least 99 wt%. Particularly preferably the solids content of the coating compositions of the invention is 100 wt%. This means the coating composition is substantially free of VOCs.

Preferred coating compositions of the invention are sprayable. Particularly preferably the coating composition of the invention is thixotropic. Thus the coating composition flows when shear is applied in a spray apparatus but does now flow once applied to a surface. This minimises the amount of sagging which occurs, even when thick layers of coating composition are applied.

Preferred coating compositions of the present invention provide a coating having a thermal conductivity of less than 0.15 W/mK, and more preferably 0-0.12 W/mK.

Preferred coating compositions of the present invention provide a coating having a heat reduction of at least 5 °C/mm, and more preferably at least 7 °C/mm, more preferred 9 °C/mm or more.

Preferred coating compositions of the present invention provide a coating that is curable at ambient temperature. Particularly preferred coating compositions provide a coating that is curable at temperatures of less than 100 °C, more preferably less than 50 °C, and still more preferably less than 40 °C, each at 50% RH. Preferably, the coating compositions provide a coating that has a relatively broad temperature range at which the coating is curable, e.g. a range spanning at least 80 °C, more preferably a range spanning at least 100 °C (e.g. 80-150 °C).

Preferred coating compositions of the present invention provide a coating having a sag resistance of at least 15 mm, more preferably at least 20 mm, e.g. as determined by the method described in the examples.

Preferred coating compositions of the present invention provide a coating, having resistance to peeling at 150 °C, when DFT is at least 5 mm, preferably at least 10 mm.

Preferred coating compositions of the present invention provide a coating, having resistance to cracking during a temperature change of -20 °C to 60 °C, e.g. as determined by the method described in the examples, when DFT is at least 5 mm, preferably at least 10 mm.

Particularly preferred coating compositions of the present invention provide a coating having one or more of:
a thermal conductivity of less than 0.15 W/mK, more preferably 0-0.12 W/mK;
a heat reduction of at least 5 °C/mm, more preferably at least 7 °C/mm;
curable at temperatures of less than 100 °C, and preferably less than 50 °C, at 50% RH;
a sag resistance of at least 15 mm, more preferably at least 20 mm, e.g. as determined by the method described in the examples;
resistance to peeling at 150 °C, at a dry thickness of at least 5 mm, preferably at least 10 mm; and/or
resistance to cracking during a temperature change of -20 °C to 60 °C (e.g. as determined by the method described in the examples) at a dry thickness of at least 5 mm, preferably at least 10 mm.

### Containers and kits

The present invention also relates to a container containing a coating composition as hereinbefore described. Suitable containers include cardboard boxes lined with a plastic bag and plastic bags (so called "big bags").

Alternatively, the coating composition of the present invention may be provided in the form of a kit. In a kit, the curing agent is preferably present in a separate container to the binder. Kits therefore comprise:
(iii) a first container containing binder, optionally hollow, inorganic, spherical, filler particles and optionally hollow, organic, spherical, filler particles;
(iv) a second container containing curing agent, optionally hollow, inorganic, spherical, filler particles and optionally hollow, organic, spherical, filler particles,
wherein each of said hollow, inorganic, spherical, filler particles and said hollow, organic, spherical, filler particles are present in at least one of said containers and wherein the volume ratio of said inorganic, spherical filler particles to said organic, spherical filler particles is at least 1.1:1.

In preferred kits of the invention, the hollow, inorganic, spherical, filler particles are present in one container (e.g. the first container) and the hollow, organic, spherical, filler particles are present in a separate container (e.g. the second container). Alternatively, the hollow, inorganic, spherical filler particles and hollow, organic, spherical, filler particles may be present in both the first and second containers. Preferred kits further comprise an accelerator, particularly preferably in the second container. Preferred kits further comprise a reactive diluent, particularly preferably in the first container. Preferred kits further comprise an adhesion promoter, particularly preferably in the first container.

Particularly preferred kits of the invention further comprise thickener. Thickener may be present in the first container, the second container or in both containers. In especially preferred kits, thickener is present in both containers.

### Manufacture

The present invention also relates to a process for preparing a coating composition as hereinbefore described comprising mixing:
(i) a binder;
(ii) optionally a curing agent;
(iii) hollow, inorganic, spherical, filler particles; and
(iv) hollow, organic, spherical, filler particles.

In preferred methods of the invention, the binder and a proportion of each of the hollow, spherical, filler particles are premixed and separately the curing agent and the remaining proportion of each of the hollow, spherical, filler particles are premixed. The two resulting mixtures are then combined and mixed.

When present, the reactive diluent is preferably premixed with the binder. When present, the adhesion promoter is preferably premixed with the binder. When present, the accelerator is preferably premixed with the curing agent.

When present, thickener is preferably premixed with each of the binder and the curing agent.

Any conventional mixing equipment may be used.

### Application to surfaces

The present invention also relates to a method for coating a surface, wherein said method comprises:
(i) applying a composition as hereinbefore described; and
(ii) curing said composition to form a coating on the surface.

Optionally the surface is pre-treated prior to application of the coating composition of the invention. Optionally the surface is coated with a primer composition prior to application of the coating composition of the invention. Thus the coating composition of the present invention may be part of a coating system. In a preferred coating system, a primer is applied to the surface and then the coating composition is applied to the primer layer. Examples of suitable primers include poly(urethane)-based and epoxy-based primers.

The temperature of the surface to which the composition is applied is preferably in the range -10-180 °C, more preferably -5-150 °C, still more preferably 0-10 °C and 10 to 50 °C. An advantage of the coating compositions of the present invention is that they may be applied to both hot and cold surfaces.

The coating composition of the invention may be applied to a substrate by any conventional coating method, e.g. spraying, rolling, dipping etc. Preferably the coating composition is applied by spraying, and more preferably by airless spraying. Spraying is preferred as it enables large surface areas to be coated in a uniform manner. Additionally spraying can be used to coat non-horizontal surfaces. Preferably the substrate is metal, in particular steel.

The present invention also relates to a coating comprising a coating composition as hereinbefore described. Optionally the coating is applied in a number of steps, wherein a first layer of the coating is applied, dried and cured, then a subsequent layer of coating is applied. Preferably the number of application steps is minimised. An advantage of the coating composition of the present invention is that it has a high sagging resistance so relatively thick layers of coating can be applied in a single step. Preferably the layer of coating applied in a single step is 0.2-20 mm, more preferably 0.5-10 mm.

The coating composition of the present invention may be used to form a single layer coating or a multilayer coating (i.e. a coating system). In the case of a multilayer coating the coating composition of the present invention is preferably used to form a second layer on the substrate, e.g. metal pipe, above a primer layer. Preferably a top coat is applied. Examples of suitable top-coat layers are layers comprising poly(urethane)-based resins, acrylic resins, silicone resins or mixtures thereof. However, the coating composition of the invention can also be used as a primer layer.

### Curing

Preferably the coating of the present invention is cured. Thus, once a substrate is coated with the coating composition of the invention, the coating is preferably cured. Preferably the coating of the present invention is curable at ambient temperatures. Preferably therefore the coating of the present invention does not require heat to cause curing. This means the coating of the present invention is curable over a broad temperature range, e.g. from relatively low temperatures to relatively high temperatures (e.g. on hot surfaces). Preferably the curing time (i.e. time to achieve surface dryness by the thumb-test) is 0.5-10 hr, more preferably 1-5 hr.

### Coatings and Articles

The present invention also relates to a substrate coated with a coating composition as hereinbefore described or a coating as hereinbefore described. The coating composition of the invention may be applied to any substrate. Representative examples of substrates include metal substrate (steel, galvanized steel, aluminium, copper), glass, ceramic, and polymeric materials (e.g. plastics). A preferred substrate is a metal substrate. The coatings of the present invention provide thermally insulative coatings on such substrates. The types of metal substrates that are preferably coated with coatings of the present invention are therefore those which are in contact with hot substances. Examples of metal substrates include tanks, line pipes, bends and fittings, valves, pumps, manifolds, coils and tracers. A particularly preferred substrate is a metal tank or metal pipe, e.g. metal tanks and pipes for oil and gas recovery.

The substrate may be partially, or completely coated, with the coating composition or coating of the invention. Preferably, however, all of the substrate is coated with the coating composition or coating of the invention. In the case of a tank or pipe, preferably external walls are coated with the coating composition of the invention.

Preferably the coating has a total dry thickness of 2-150 mm, more preferably 5-100 mm and still more preferably 8-80 mm. Preferably the coating is insulative. Thus a preferred coating of the invention is on a metal surface, wherein said coating is insulative and has a thickness of at least 2 mm and the coating comprises:
(i) a binder;
(ii) a curing agent;
(iii) hollow, inorganic, spherical, filler particles; and
(iv) hollow, organic, spherical, filler particles.

Preferably the coating is a thermal insulating coating. Preferred binder, curing agent, filler particles and other ingredients present in the coating are as hereinbefore described.

Preferred coatings of the present invention have a thermal conductivity of less than 0.15 W/mK, and more preferably 0-0.12 W/mK.

Preferred coatings of the present invention have a heat reduction of at least 5 °C/mm, more preferably at least 7 °C/mm, and still more preferably 9 °C/mm or more.

Preferred coatings of the present invention are curable at ambient temperature. Particularly preferred coatings are curable at temperatures of less than 100 °C, more preferably less than 50 °C, and still more preferably less than 40 °C, each at 50% RH. Preferably, the coatings have a relatively broad temperature range over which they are curable, e.g. a range spanning at least 80 °C, more preferably a range spanning at least 100 °C (e.g. 80-150 °C).

Preferred coatings of the present invention have a sag resistance of at least 15 mm, more preferably at least 20 mm, e.g. as determined by the method described in the examples.

Preferred coatings of the present invention have resistance to peeling at 150 °C, when DFT is at least 5 mm, preferably at least 10 mm.

Preferred coatings of the present invention have resistance to cracking during a temperature change of -20 °C to 60 °C, e.g. as determined by the method described in the examples, when DFT is at least 5 mm, preferably at least 10 mm.

Particularly preferred coatings of the present invention have one or more of:
a thermal conductivity of less than 0.15 W/mK, more preferably 0-0.12 W/mK;
a heat reduction of at least 5 °C/mm, more preferably at least 7 °C/mm;
curable at temperatures of less than 100 °C, and preferably less than 50 °C, at 50% RH;
a sag resistance of at least 15 mm, more preferably at least 20 mm, e.g. as determined by the method described in the examples;
resistance to peeling at 150 °C, at a dry thickness of at least 5 mm, preferably at least 10 mm; and/or
resistance to cracking during a temperature change of -20 °C to 60 °C (e.g. as determined by the method described in the examples) at a dry thickness of at least 5 mm, preferably at least 10 mm.

Viewed from another aspect the present invention provides a coating, having one or more of:
a thermal conductivity of less than 0.15 W/mK, more preferably 0-0.12 W/mK;
a heat reduction of at least 5 °C/mm, more preferably at least 7 °C/mm;
curable at temperatures of less than 100 °C, and preferably less than 50 °C, at 50% RH;
a sag resistance of at least 15 mm, more preferably at least 20 mm, e.g. as determined by the method described in the examples;
resistance to peeling at 150 °C, at a dry thickness of at least 5 mm, preferably at least 10 mm; and/or
resistance to cracking during a temperature change of -20 °C to 60 °C (e.g. as determined by the method described in the examples) at a dry thickness of at least 5 mm, preferably at least 10 mm

### Uses

The present invention also provides the use of a composition as hereinbefore described to form a coating, preferably an insulative coating, on at least one surface of an article. Preferably the surface is a metal surface as hereinbefore described.

The invention will now be described with reference to the following non-limiting examples.

### EXAMPLES

### Materials

The compounds and polymers used in the examples were all available commercially. The compounds and polymers used are summarised in the table below.

| Ingredient | Function |
|---|---|
| Bisphenol F epoxy, liquid epoxy, EEW 170 g/eq, viscosity 2000-5000 cp | Resin |
| Aliphatic glycidylether, EEW 290 g/eq, viscosity 12 cp | Reactive diluent |
| γ-glycidoxypropyl-trimethoxysilane (Silquest A-187) | Adhesion promoter |

| Dispersing agent | |
|---|---|
| Hollow, glass, spherical, filler particles, average diameter 30 µm, crush strength 3000 psi (3M S28HS) | Filler |
| Hollow, organic, spherical, filler particles, average diameter 80 µm (Expancel 043DET80d20) | Filler |
| Modified polyamine curing agent, AHEW 95 | Curing agent |
| g/eq, viscosity 350-650 cp | |
| Amide wax, thickening agent | Thickening agent |
| Organoclay, thickening agent | Thickening agent |
| Fumed/pyrogenic silica | Thickening agent |

### Preparation of coating compositions

The components of the coating compositions were mixed in the proportions set out in the Tables below. The components of the compositions are given in the tables as wt% without brackets and as vol% with brackets.

All liquid parts of Component A were mixed in a dissolver. The appropriate filler(s) was then added to a weighed amount of the pre-mixed liquid phase and sealed off in a container. This was then homogenized on a Speedmixer operating at 1800 rpm for 90 seconds. The same procedure was followed for Component B, before Component A and Component B were transferred to the same container and speedmixed at 1800 rpm for 90 seconds.

The solids contents were calculated based on information provided by the suppliers on the solids contents of their products.

The VOCs were less than 0.5 g/L. The coating compositions were essentially solvent free.

### Preparation of samples for testing

For thermal conductivity testing the mixed, liquid coatings were poured into circular silicone moulds (60mm diameter) to depths of 10 mm and 20 mm and then left to cure (24 hours at 22°C, 5 days at 60°C, 24 hours at 22°C).

For heat reduction testing steel plates (3 mm thick, carbon steel, Sa 2½) were placed in appropriate silicone moulds and coated with the mixed, liquid coatings. The (wet and dry) thickness of the coating was 10-15 mm.

Coating of T-bars (carbon steel, Sa 2½, 1 cm thick, LxWxH of 10×11×14 cm) was performed by placing the T-bar into a 3D-printed mould, with 15 mm clearing to all sides. The pre-mixed composition to be studied was poured into the mould and allowed to cure (24 h at 22°C, 5 days at 60°C, 24 h at 22°C).

For sag testing steel plates were placed in appropriate silicone moulds and coated with the mixed, liquid coatings. The (wet and dry) thickness of the coating varied from 1 mm to 15 mm.

All moulds were removed prior to testing.

### Test Methods

- Coating thickness was measured using a ruler or calliper.
- Thermal conductivity (W/mK) was tested on a FOX50 apparatus from TA instruments according to ASTM C518 and/or C177.
- Heat reduction (°C/mm) was measured by comparing the temperature on the steelplate surface (underneath the coating), together with the temperature on top of the coating surface, by means of separate thermocouples. Heating was performed by placing the coated steelplate on a hotplate set at 180-210°C.
- T-bar testing: The coated T-bar was subjected to thermal cycles as follows: 3 hours at 60°C, reducing temperature by 40°C/hour for 2 hours, 3 hours at -20°C, increasing temperature by 40°C/hour for 1 hour, 2 hours at 20°C, increasing temperature by 40°C/hour for 1 hour, repeat cycle.
- Thermal shock testing was done by leaving the coated T-bar in an oven set at 150°C for 16 hours, before directly transferring the sample to a climate chamber set at -20°C and leaving it there for 2 hours.
- Sag resistance was tested by placing steel plates at the bottom of silicone moulds, allowing for different thicknesses of coating. The moulds were filled with the composition to be tested and immediately positioned vertically. A spatula was used to draw a horizontal line down to the bare steel. The test samples were then cured for 16 hours at 23 °C and 50 %RH. The samples were visually inspected to determine sagging of the coating. The highest coating thickness where no sagging was observed was reported (in mm).
- Density of coatings was calculated based on the density of each component related to its mass/volume percentage in the coating.

The results of testing are also set out in the tables below wherein CE means comparative example.

| | CE 1 | CE 2 | Example 1 | Example 2 | Example 3 | CE3 |
|---|---|---|---|---|---|---|
| **Component A** | | | | | | |
| Bisphenol F epoxy | 42.7 (11.9) | 31.0 (14.9) | 33.5 (15.2) | 34.2 (14.7) | 33 (13.0) | 35.4 (12.9) |
| Aliphatic | 19.3 | 14.0 | 15.0 | 15.4 | 15.0 | 16.0 |
| glycidylether | (7.2) | (9.0) | (9.1) | (8.9) | (7.8) | (7.8) |
| γ-glycidoxypropyl-trimethoxysilane | 2.3 (0.7) | 1.6 (0.9) | 1.8 (0.9) | 1.8 (0.9) | 1.7 (0.75) | 1.9 (0.8) |
| Dispersing agent | 1.3 (0.4) | 0.9 (0.5) | 1.0 (0.5) | 1.0 (0.5) | 1.0 (0.5) | 1.0 (0.4) |
| Hollow, glass, spherical filler | 0 | 23.8 (48.5) | 25.7 (49.4) | 21.8 (39.9) | 24.1 (40.0) | 18.1 (27.9) |
| Hollow, organic, spherical filler | 3.2 (54.2) | 0 | 0 | 0.35 (9.0) | 0.7 (15.6) | 1.1 (27.9) |

| **Component B** | | | | | | |
|---|---|---|---|---|---|---|
| Modified polyamine curing agent | 30.2 (9.9) | 21.9 (12.5) | 22.5 (11.1) | 24.9 (12.7) | 24.0 (11.1) | 25.8 (11.1) |
| Hollow, glass, spherical filler | 0 | 6.7 (13.7) | 0 | 0 | 0 | 0 |
| Hollow, organic, spherical filler | 1.0 (15.7) | 0 | 0.5 (13.8) | 0.5 (13.4) | 0.5 (11.7) | 0.7 (14.7) |

| **Composition** | | | | | | |
|---|---|---|---|---|---|---|
| Mixing ratio of component A to component B (wt%) | 69:31 | 71:29 | 77:23 | 75:25 | 75.5:24.5 | 74:26 |
| Mixing ratio of component A to component B (vol%) | 74:26 | 74:26 | 75:25 | 76:24 | 77:23 | 76:24 |
| Weight ratio of glass to organic filler | Only organic, spherical filler | Only glass, spherical filler | 50:1 | 50:2 | 50:2.5 | 50:5 |
| Volume ratio of glass to organic filler | Only organic, spherical filler | Only glass, spherical filler | 3.6:1 | 1.8:1 | 1.5:1 | 0.71:1 |
| Density (g/ml) | 0.3 | 0.5-0.6 | 0.5 | 0.51 | 0.46 | 0.43 |
| Total vol% fillers | 70 | 62 | 63 | 63 | 67 | 67 |
| Calculated wt% solids content | 99.96 | 99.96 | 99.96 | 99.96 | 99.96 | 99.96 |

| **Test results** | | | | | | |
|---|---|---|---|---|---|---|
| Thermal conductivity (W/mK) | 0.04 | 0.10 | 0.09 | 0.085 | 0.090 | 0.067 |
| Film thickness (mm) | 12 | 12 | 12 | 12 | 12 | 12 |
| Heat Reduction (°C/mm) | 13.0 | 9.0-11.0 | 9.0-11.0 | 10.0 | 12 | N/A |
| Temperature change testing | | | | | | |
| Steel plate at 140-150 °C | Fails - peels off | Passes - no change | Passes - no change | Passes - no change | Passes - no change | Fails - peels off |
| Temperature change testing (shock test and cycles) | Fails | Cracking on T-bar in -20°C 〉̶ 60 °C cycles | Passes - no change | Passes - no change | Crack visible at -20°C | N/A |

| | | | | | | |
|---|---|---|---|---|---|---|
| N/A = not available | | | | | | |

The coatings of the invention (examples 1 and 2) show a desirable balance of properties. The coating compositions are sprayable and dry in an acceptable time at room temperature. The coatings exhibit a desirable low level of thermal conductivity and a high level of heat reduction, and do not deteriorate during temperature change testing, i.e. no peeling or cracking occurs when the temperature changes, whether the temperature change is rapid or gradual. In contrast, the comparative coatings (CE1 and CE2), which did not comprise a mixture of hollow glass, spherical filler particles and hollow, organic filler particles, exhibited peeling or cracking in the testing carried out.

Similarly the coatings of the invention (examples 1 and 2) showed a better performance than the comparative coating (CE3) which comprises a mixture of hollow, glass spherical filler particles and hollow, organic filler particles, but with a lower volume ratio of glass to organic filler particles of 0.71:1 (c.f. 3.6:1 and 1.8:1 in examples 1 and 2 respectively). As discussed above, the examples 1 and 2 produced coatings which do not deteriorate during temperature change cycling, i.e. no peeling or cracking occurs when the temperature changes in a thermal shock experiment, whereas the coating of CE3 fails in the same experiment.

Another important property of coating compositions, particularly those applied to non-horizontal surfaces, is their ability to resist sagging. Thicker coatings tend to sag more than thinner coatings. However, to achieve thermal insulation, it is often necessary to build up relatively thick coatings, e.g. 10-15 mm, and the fewer coats necessary to achieve the desired thickness the better. The sag resistance of a number of different coating compositions was tested.

| | Example 4 | Example 5 | Example 6 | Example 7 | Example 8 |
|---|---|---|---|---|---|
| **Component A** | | | | | |
| Bisphenol F epoxy | 32.5 (15.0) | 33.0 (15.0) | 33.0 (15.0) | 33.0 (15.0) | 33.0 (15.0) |
| Aliphatic glycidylether | 14.5 (9.0) | 15.0 (9.0) | 15.0 (9.0) | 15.0 (9.0) | 15.0 (9.0) |
| γ-glycidoxypropyl-trimethoxysilane | 1.5 (1.0) | 0 | 0 | 0 | 0 |
| Dispersing agent | 1.0 (0.5) | 1.0 (0.5) | 1.0 (0.5) | 1.0 (0.5) | 1.0 (0.5) |
| Hollow, glass, spherical filler | 25.5 (48.0) | 25.5 (48.5) | 25.5 (49.0) | 25.5 (49.0) | 25.5 (49.0) |
| Hollow, organic, spherical filler | 0 | 0 | 0 | 0 | 0 |
| Amide wax | 0.75 (0.4) | 0.75 (0.4) | 0 | 0 | 0.75 (0.25) |
| Organoclay | 0 | 0 | 0.75 (0.25) | 0 | 0 |
| Fumed silica | 0 | 0 | 0 | 0.75 (0.25) | 0 |

| **Component B** | | | | | |
|---|---|---|---|---|---|
| Modified | 23.5 | 23.5 | 23.5 | 23.5 | 23.5 |
| polyamine curing agent | (12.5) | (12.5) | (12.5) | (12.5) | (12.5) |
| Amide wax | 0.75 (0.4) | 0.75 (0.4) | 0 | 0 | 0 |
| Organoclay | 0 | 0 | 0.75 (0.25) | 0 | 0 |
| Fumed silica | 0 | 0 | 0 | 0.75 (0.25) | 0.75 (0.25) |
| Hollow, glass, spherical filler | 0 | 0 | 0 | 0 | 0 |
| Hollow, organic, spherical filler | 0.5 | 0.5 | 0.5 | 0.5 | 0.5 |

| **Composition** | | | | | |
|---|---|---|---|---|---|
| Mixing ratio of component A to component B (wt%) | 70:30 | 70:30 | 70:30 | 70:30 | 70:30 |
| Mixing ratio of component A to component B (vol%) | 63.5:36.5 | 63.5:36.5 | 63.5:36.5 | 63.5:36.5 | 63.5:36.5 |
| Weight ratio of glass to organic filler | 50:1 | 50:1 | 50:1 | 50:1 | 50:1 |
| Volume ratio of glass to organic filler | 50:14 (3.5:1) | 50:14 (3.5:1) | 50:14 (3.5:1) | 50:14 (3.5:1) | 50:14 (3.5:1) |
| Density (g/ml) | 0.542 | 0.535 | 0.537 | 0.537 | 0.537 |
| Total vol% fillers | 61.5 | 61.5 | 61.5 | 61.5 | 61.5 |
| Calculated wt% solids content | 99.96 | 99.96 | 99.96 | 99.96 | 99.96 |

| **Test results** | | | | | |
|---|---|---|---|---|---|
| Thermal conductivity (W/mK) | 0.096 | 0.097 | NA | NA | 0.093 |
| Sag resistance | | >10 mm | <3 mm | 3 mm | 4 mm |

| | | | | | |
|---|---|---|---|---|---|
| N/A = not available | | | | | |

The results show that the coating compositions of the invention are able to resist sagging. For instance, when the coating composition of example 5 was applied in a thickness of >10 mm, no sagging was observed when it was placed vertically. This is highly advantageous as it means coatings can be applied in a relatively small number of thick coats. Of the different thickeners tested, the results show that the amide wax provided coating compositions with the highest level of sag resistance (example 5 cf. examples 6, 7 and 8).

## Claims

1. A coating composition, preferably a solvent-free composition, comprising:
(i) a binder;
(ii) optionally a curing agent;
(iii) hollow, inorganic, spherical, filler particles; and
(iv) hollow, organic, spherical, filler particles;
wherein the volume ratio of said inorganic, spherical filler particles to said organic, spherical filler particles is at least 1.1:1, preferably 1.1:1.0 to 10.0:1.0.

2. A composition as claimed in claim 1, wherein said binder is selected from epoxy-based, preferably epoxy, acrylic, alkyd, phenolic based, silicone, polysiloxane, polyurethane, polyurea, polyaspartic and hybrids and mixtures thereof, and preferably said binder is epoxy-based, particularly epoxy.

3. A composition as claimed in claim 1 or 2, wherein said curing agent is an aliphatic or cycloaliphatic amine or polyamine.

4. A composition as claimed in any preceding claim, wherein said hollow, inorganic, spherical filler particles comprise, preferably consist of, glass.

5. A composition as claimed in any preceding claim, wherein said hollow, inorganic, spherical filler particles have an average diameter of 10-100 microns.

6. A composition as claimed in any preceding claim, wherein said hollow, organic, spherical, filler particles have an average diameter of 10-120 microns.

7. A composition as claimed in any preceding claim, wherein the average diameter of the hollow, organic, spherical filler particles is greater than the average diameter of the hollow, inorganic, spherical filler particles.

8. A composition as claimed in any preceding claim, wherein the volume ratio of hollow, inorganic, spherical filler particles to hollow, organic, spherical particles is 1.1:1.0 to 10.0:1.0, preferably 5:1:1.0 to 1.2:1.0.

9. A composition as claimed in any preceding claim, further comprising a thickener, preferably an amide wax thickener.

10. A composition as claimed in any preceding claim, further comprising an organosilane adhesion promoter.

11. A method for preparing a composition as claimed in any preceding claim, comprising mixing:
(i) a binder;
(ii) optionally a curing agent;
(iii) hollow, inorganic, spherical, filler particles; and
(iv) hollow, organic, spherical, filler particles.

12. A kit for preparing a composition as claimed in any one of claims x to x, comprising:
(i) a first container containing binder, optionally hollow, inorganic, spherical, filler particles and optionally hollow, organic, spherical, filler particles;
(ii) a second container containing curing agent, optionally hollow, inorganic, spherical, filler particles and optionally hollow, organic, spherical, filler particles,
wherein each of said hollow, inorganic, spherical, filler particles and said hollow, organic, spherical, filler particles are present in at least one of said containers and wherein the volume ratio of said inorganic, spherical filler particles to said organic, spherical filler particles is at least 1.1:1.

13. A method of providing a coating on a surface, preferably a metal surface, wherein said method comprises:
(i) applying a composition as claimed in any one of claims 1 to 10; and
(ii) curing said composition to form a coating on the surface.

14. A coating on a surface, preferably a metal surface, wherein said coating is formed from a composition as claimed in any one of claims 1 to 10.

15. Use of a composition as claimed in any one of claims 1 to 10 to form a coating, preferably an insulating coating, on at least one surface (e.g. a metal surface) of an article.
